# EUROPÄISCHE PATENTSCHRIFT

(11) **EP 3 283 452 B1**
(45) Veröffentlichungstag und Bekanntmachung des Hinweises auf die Patenterteilung: **11.12.2019**
(21) Anmeldenummer: 16720358.7
(22) Anmeldetag: 12.04.2016
(51) Int. Cl.: C05G 3/00, C08G 18/54, C08G 18/65, C08G 18/76, C08G 18/18, C09D 175/04, C08G 18/32, C08G 18/36

(54) **BESCHICHTETER KÖRNIGER STOFF**
COATED GRANULAR SUBSTANCE
SUBSTANCE GRANULEUSE ENROBÉE

(30) Priorität: 13.04.2015 DE 102015004670
(43) Veröffentlichungstag der Anmeldung: 21.02.2018
(73) Patentinhaber: ASK Chemicals GmbH, 40721 Hilden (DE)
(72) Erfinder: WALLENHORST, Carolin, 40219 Düsseldorf (DE); WINTER, Reinhard, 42489 Wülfrath (DE); KLESING, Jan, 45259 Essen (DE)
(74) Vertreter: Vossius & Partner Patentanwälte Rechtsanwälte mbB
(86) Internationale Anmeldenummer: PCT/EP2016/058012
(87) Internationale Veröffentlichungsnummer: WO 2016/166100

(56) Entgegenhaltungen:
- EP-A1- 2 818 040
- WO-A1-2011/084865
- WO-A2-2009/117479
- WO-A2-2013/077725
- DE-A1-102005 041 763
- DE-A1-102009 037 009
- US-A- 4 338 408
- US-A- 4 433 170
- US-A- 4 464 488
- US-A1- 2015 040 630

## Beschreibung

### Technisches Gebiet

Die vorliegende Erfindung betrifft beschichtete körnige Stoffe, wobei die Beschichtung ein Harz umfasst, das das Reaktionsprodukt aus einer Polyol- und einer Isocyanatkomponente umfasst, und das durch die Zugabe eines Katalysators gehärtet wurde. Die Erfindung betrifft auch das Verfahren zur Herstellung der beschichteten körnigen Stoffe.

### Stand der Technik

Mit einer wasserunlöslichen, aber wasserdurchlässigen Schicht umhüllte körnige, zumindest teilweise wasserlösliche Stoffe sind allgemein bekannt. Besondere Bedeutung haben diese Stoffe auf dem Gebiet der Düngemittel erlangt, da durch die Umhüllung die Auflösungsgeschwindigkeit der Wirkstoffe gesteuert werden kann. Auf diese Weise ist es möglich, Langzeitdünger mit einer Wirksamkeit von mehreren Monaten zu erhalten.

Als Umhüllungsharze wurden diverse Systeme vorgeschlagen. Die folgenden Beispiele stellen dabei nur eine kleine Auswahl dar.

DE 1242573 beschreibt z.B. ein Verfahren zum Einkapseln von Granulaten mit einem Überzugsmittel bestehend aus einem Copolymerisat aus trocknenden oder halbtrocknenden Ölen mit Cyclopentadien.

DE 2155924 offenbart Phenolresole zur Beschichtung granulierter Dünger.

Nach WO 02/096548 wird die Umhüllung mit einem 2-Komponentensystem auf Basis von Maleinatölund epoxidierten Ölen durchgeführt.

In WO 96/41779 wird ein carboxylgruppenhaltiges Ethylencopolymer verwendet.

In EP 0230601 und EP 1451129 werden 2-Komponenten Polyurethansysteme eingesetzt. WO2013/077725 beschreibt einen Dünger mit kontrollierter Freisetzung, umfassend Düngemittelteilchen, eingekapselt in ein biologisch abbaubares Polyurethan, erhalten aus einer Reaktion zwischen einem Polyisocyanat und einer gegenüber Isocyanat reaktiven Komponente, die durch ein Polyol und ein Methylesterderivat eines natürlichen Öls gebildet wird, in Gegenwart eines Aminkatalysators.

In den beiden letztgenannten Patentanmeldungen wird die Aushärtung der Beschichtungskomponenten vorzugsweise durch Amine katalysiert, wobei zwei Arten der Katalysatorzugabe offenbart werden. Zum einen können Amine nach der Umhüllung der körnigen Stoffe mit der Polyol- und der Isocyanatkomponente gasförmig in reiner Form oder als gasförmiges Gemisch mit Luft oder Inertgas in die Beschichtungsapparatur eingeleitet werden, zum anderen kann der Katalysator vor der Beschichtung der Polyolkomponente zugesetzt werden.

Bei Anwendung der Katalysator-Begasungstechnik werden vorzugsweise niedrig siedende Amine wie beispielsweise Trimethylamin, Triethylamin, Dimethylethylamin oder Dimethylisopropylamin eingesetzt. Wird dagegen der Katalysator der Polyolkomponente zugesetzt, finden höher siedende Amine oder andere in der Polyurethanchemie übliche Katalysatoren Verwendung.

Insbesondere das Begasungsverfahren wird in der Praxis in großem Maßstab praktiziert. Nachteilig sind jedoch vor allem drei Dinge:
- Wegen der hohen Entzündlichkeit der Katalysatoren müssen die Beschichtungsanlagen explosionsgeschützt sein, was enorme Investitionskosten bedeutet.
- Wegen der Giftigkeit und des charakteristisch unangenehmen Geruchs der niedrig siedenden Amine dürfen diese nicht in die Umwelt gelangen. Der gesamte Gasstrom muss deshalb nach dem Austritt aus der Beschichtungsapparatur einer besonderen Nachbehandlung zugeführt werden, bei der die Amine aus der Abluft entfernt werden. Auch an die Dichtigkeit der gesamten Anlage inklusive der Zu- und Ableitungen sind erhöhte Anforderungen gestellt. Dies alles stellt ebenfalls einen nicht unerheblichen Kostenfaktor dar.
- Wenn die Umhüllung schichtweise erfolgt, muss die Anlage vor dem Aufbringen jeder neuen Schicht völlig katalysatorfrei gespült werden, um eine vorzeitige Reaktion der Polyol- und der Isocyanatkomponenten miteinander zu verhindern. Dieser Vorgang ist zeitaufwendig und verursacht einen erhöhten Katalysatorverbrauch.

Auch die zweite Härtungsvariante, bei welcher der Katalysator in der Polyolkomponente gelöst vorhanden ist, weist bestimmte Nachteile auf.
- Viele der an sich geeigneten Katalysatoren sind nicht oder nur in nicht ausreichendem Maß im Polyol löslich.
- Einige der an sich geeigneten Katalysatoren bewirken sogar eine Phasentrennung oder führen zu Ausfällungen in der Polyolkomponente.
- Die Aushärtung beginnt vielfach schon bevor die beiden Reaktionspartner gleichmäßig um das zu beschichtende Korn verteilt sind.

Weiterhin führen die im Stand der Technik verwendeten Katalysatoren zu einer relativ langsamen Härtung der Polyurethanbeschichtung. Dies führt zu einer höheren Herstellungsdauer, insbesondere wenn mehrere Schichten auf den körnigen Stoff aufgetragen werden sollen.

Eine Aufgabe der vorliegenden Erfindung ist die Bereitstellung von beschichteten körnigen Stoffen mit einer guten Freisetzungscharakteristik des körnigen Stoffes. Weiterhin sollen bei der Herstellung der beschichteten körnigen Stoffe die oben beschriebenen Probleme überwunden werden können. Eine weitere Aufgabe besteht in der Bereitstellung eines Herstellungsverfahrens zur Beschichtung von körnigen Stoffen, bei dem die Aushärtung der Beschichtung in kurzer Zeit erfolgt.

### Offenbarung der Erfindung

Die obigen Aufgaben werden durch den beschichteten körnigen Stoff und das Verfahren zum Beschichten eines körnigen Stoffes gemäß der vorliegenden Erfindung gelöst. Gegenstand der vorliegenden Erfindung ist somit ein beschichteter körniger Stoff, wobei die Beschichtung ein Harz umfasst. das das Reaktionsprodukt aus einer Polyolkomponente und einer Isocyanatkomponente umfasst, und das durch Zugabe eines Katalysators gehärtet wurde, wobei der Katalysator eine Hydroxylgruppen enthaltende Aminverbindung der allgemeinen Formel (I) umfasst: 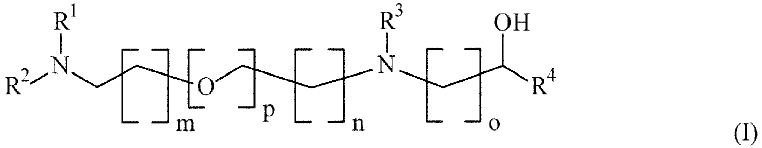 wobei R¹ ein C₁- bis C₄-Alkylrest ist; R² ein C₁- bis C₄-Alkylrest ist; R³ ein C₁- bis C₄-Alkylrest, ein Rest -(CH₂)_{q}-CH(OH)R⁵ oder ein Rest -CH₂-(CH₂),-NR⁶R⁷ ist; R⁴ ein Wasserstoffatom oder ein C₁- bis C₄-Alkylrest ist; R⁵ ein Wasserstoffatom oder ein C₁- bis C₄-Alkylrest ist; R⁶ ein C₁- bis C₄-Alkylrest ist; R⁷ ein C₁- bis C₄-Alkylrest ist; m eine ganze Zahl von 0 bis 10 ist; n eine ganze Zahl von 0 bis 10 ist; o eine ganze Zahl von 1 bis 10 ist; p eine ganze Zahl von 0 bis 10 ist; q eine ganze Zahl von 1 bis 10 ist; und r eine ganze Zahl von 0 bis 10 ist.

Außerdem ist Gegenstand der vorliegenden Erfindung ein Verfahren zum Beschichten eines körnigen Stoffes, umfassend die Schritte (a) Bereitstellen eines körnigen Stoffes; (b) Bereitstellen einer Polyolkomponente und einer Isocyanatkomponente; (c) wahlweise Mischen der Polyolkomponente mit der Isocyanatkomponente; (d) Zugabe der Mischung aus Schritt (c) oder der Polyolkomponente und der Isocyanatkomponente als Einzelstoffe zu dem bereitgestellten körnigen Stoff und Erzeugen einer Beschichtung auf dem körnigen Stoff; (e) Zufügen eines Katalysators zum Härten der Beschichtung; (f) wahlweise Wiederholen der Schritte (d) und (e), wobei der Katalysator eine Hydroxylgruppen enthaltende Aminverbindung der obigen allgemeinen Formel (I) umfasst.

### Detaillierte Beschreibung

Der beschichtete körnige Stoff gemäß der vorliegenden Erfindung enthält einen körnigen Stoff (im Folgenden auch als "der zu beschichtende körnige Stoff" bezeichnet), der von einem Harz umhüllt ist.

Die zu beschichtenden körnigen Stoffe sind nicht kritisch, sie können aus den, auf dem Fachgebiet bekannten Stoffen ausgewählt sein. Grundsätzlich können alle körnigen Stoffe mit Hilfe des erfindungsgemäßen Beschichtungssystems umhüllt werden. Der körnige Stoff kann beispielsweise aus asymmetrisch geformten körnigen Stoffen (Granulaten) oder symmetrisch geformten Stoffen (Pellets) ausgewählt werden. Typische Pellets können z.B. die Form einer Kugel, eines Stäbchens, eines Zylinders oder eines Ellipsoids aufweisen. Typische Granulatkörner schließen asymmetrische Aggregate aus Pulverpartikeln, ganzen Kristallen, Kristallbruchstücken oder Partikeln oder sonstige Bruchstücke ein. Der körnige Stoff kann porös oder nicht porös sein.

Die Korngröße der zu beschichtenden körnigen Stoffe ist ebenfalls nicht kritisch. Sie kann beispielsweise von ca. 0,1 mm bis ca. 15 mm reichen (mittlerer längster Durchmesser), wobei eine mittlere Korngröße im Bereich von ca. 1 mm bis ca. 5 mm bevorzugt ist.

Die zu beschichtenden körnigen Stoffe sind vorzugsweise zumindest teilweise wasserlöslich. Somit können die zu beschichtenden körnigen Stoffe auch nicht wasserlösliche Bestandteile enthalten. Die Löslichkeit der wasserlöslichen Bestandteile des körnigen Stoffes in Wasser bei 20 °C beträgt vorzugsweise mindestens 10 g/Liter, stärker bevorzugt mindestens 30 g/Liter und besonders bevorzugt mindestens 100 g/Liter. Vorzugsweise bestehen die zu beschichtenden körnigen Stoffe vollständig aus wasserlöslichen Bestandteilen.

Beispiele solcher körnigen Stoffe sind Agrochemikalien wie Düngemittel, Pflanzenschutzmittel, Pestizide (einschließlich Insektizide, Fungizide, Bakterizide, Akarizide, Molluskizide, Nematizide, Rodentizide, Avizide), Wachstumsregulatoren, Spurenelemente, Bodenverbesserungsmittel oder Gemische davon. Bevorzugte körnige Stoffe sind Düngemittel, Pestizide (einschließlich Herbizide, Fungizide, Insektizide, Bakterizide, Akarizide, Molluskizide, Nematizide, Rodentizide, Avizide), Nitrifikationsinhibitoren, Ureaseinhibitoren, Pheromone, Repellents gegen Tiere und Insekten, Wachstumsregulatoren, Spurenelemente, Bodenverbesserungsmittel oder Gemische davon, stärker bevorzugt Düngemittel und Spurenelemente. Vorzugsweise umfasst der körnige Stoff die vorstehenden genannten Agrochemikalien (Wirkstoffe) oder der körnige Stoff besteht aus den vorstehenden genannten Agrochemikalien. In der vorliegenden Erfindung können auch sehr stark hygroskopische Stoffe als zu beschichtender körniger Stoff verwendet werden, z.B. Trocknungsmittel wie Phosphorpentoxid oder Calciumchlorid. Durch die Beschichtung kann ein zu rasches Zerfließen in feuchter Umgebung verhindert werden. Bevorzugte körnige, zumindest teilweise wasserlösliche Stoffe sind Düngemittel.

Düngemittel, die sich für die Beschichtung eignen, schließen bekannte Granulate oder Pellets von organischen und mineralischen Düngern sowie Gemische davon ein. Es kommen beispielsweise Einzel- oder Mehrnährstoffdünger in Betracht, die einzeln oder in Kombination Nährstoffe wie Stickstoff, Kalium oder Phosphor in Form ihrer Salze oder Oxide enthalten. Beispiele hierfür sind N-, NP-, NK-, PK- oder NPK-Dünger wie Kalkammonsalpeter, Ammonsulfat, Ammonsulfatsalpeter, Calciumcyanamid, Ammonnitrat oder Harnstoff. Neben den genannten Hauptbestandteilen können in den Düngemittelgranulaten in geringen Mengen auch Salze von Spurenelementen wie Magnesium, Eisen, Mangan, Kupfer, Molybdän und/oder Bor enthalten sein, üblicherweise in Mengen von bis zu ca. 5 Gew.%, vorzugsweise von ca. 0,5 bis ca. 3 Gew.%. Geeignete organische Düngemittel sind beispielsweise Guano, Fischmehl oder Knochenmehl.

Die Beschichtung umfasst ein Harz, das das Reaktionsprodukt aus einer Polyolkomponente und einer Isocyanatkomponente umfasst, und das mittels eines Katalysators gehärtet wurde, welcher eine Hydroxylgruppen enthaltende Aminverbindung der allgemeinen Formel (I) umfasst.

Zur Beschichtung der zumindest teilweise wasserlöslichen körnigen Stoffe können z.B. die in EP 0 230 601 A1 und WO 03/048075, A1 beschriebenen Polyol- und Isocyanatkomponenten eingesetzt werden. Der Inhalt dieser Anmeldungen wird hiermit in diese Anmeldung aufgenommen.

Die Polyolkomponente umfasst vorzugsweise ein Basispolyol, das mindestens eine Verbindung ausgewählt aus Cardol oder Cardanol, deren Derivaten oder deren Oligomeren und/oder ein Kondensationsprodukt aus Phenolen und Aldehyden umfasst.

Cardol und Cardanol sind substituierte Phenole bzw. Resorcine und können aus dem nachwachsenden Rohstoff Cashewschalenöl (engl.: cashew nut shell liquid, CSNL) gewonnen werden.

Cashewschalenöl wird aus dem Samen des Cashew-Baumes gewonnen und besteht zu ca. 90 Gew.% aus Anacardsäure und ca. 10 Gew.% Cardol. Durch Hitzebehandlung in saurer Umgebung entsteht durch Decarboxylierung Cardanol, ein substituiertes Phenol, sowie Cardol. Cardol und Cardanol können als reine Substanzen durch Destillation gewonnen werden. Dabei entstehen auch Oligomere dieser Verbindungen, die in dem Destillationssumpf verbleiben und mit üblichen, dem Fachmann bekannten Maßnahmen gewonnen werden können.

Erfindungsgemäß eignen sich als Ausgangsprodukte zur Reaktion mit der Isocyanatkomponente z.B. aus Cashewschalenöl gewonnenes Cardol und Cardanol oder Gemische daraus sowie deren Oligomere aus dem Destillationssumpf, welche als technische Produkte zur Verfügung stehen. Ferner können auch Derivate von Cardol und/oder Cardanol als Ausgangssubstanzen eingesetzt werden. Hier seien beispielhaft durch Maleinieren, Epoxidieren oder Hydrieren der in den Seitenketten vorhandenen Doppelbindungen erhaltene Reaktionsprodukte genannt. Diese können wahlweise weiter mit Wasser oder einem Alkohol umgesetzt werden, wobei in den Seitenketten Diole oder α-Hydroxyether entstehen. Weitere geeignete Derivate von Cardol und/oder Cardanol können auch durch Umsetzen dieser Verbindungen oder der durch Maleinieren, Epoxidieren oder Hydrieren erhaltenen Verbindungen mit einem Aldehyd erhalten werden.

Cardol, Cardanol, und deren nach den obigen Methoden erhältliche Derivate lassen sich nach bekannten Verfahren, wie z.B. durch Umsetzung mit Formaldehyd oligomerisieren. Sowohl die Monomere als auch die Oligomere eignen sich auf Grund ihrer Hydroxyfunktionalität gut zur Umsetzung mit Isocyanaten und können z.B. Kondensationsprodukte aus Phenolen und Formaldehyd in einigen Anwendungen teilweise oder ganz ersetzen.

Die erfindungsgemäße Polyolkomponente umfasst vorzugsweise mindestens eine Verbindung ausgewählt aus Cardol und/oder Cardanol oder deren Derivaten oder Oligomeren oder Mischungen daraus zu einem Anteil von ca. 5 bis ca. 100 Gew.%, vorzugsweise von ca. 7 bis ca. 70 Gew.%, besonders bevorzugt ca. 10 bis ca. 40 Gew.%.

Gemäß der vorliegenden Anmeldung sind Phenole aromatische Verbindungen die eine Phenylgruppe und mindestens eine phenolische Hydroxylgruppe enthalten. Beispiele für Phenole sind Phenol, Brenzcatechin, Resorcin, Hydrochinon, Pyrogallol, Phloroglucin, und Naphthole, vorzugsweise Phenol und Resorcin. Die Phenole können mit anderen funtionellen Gruppen substituiert sein, wie z.B. Halogenatomen, Alkylgruppen, Alkoxygruppen, Arylgruppen, oder Alkylarylgruppen. Beispiele von substituierten Phenolen sind Kresole, Thymol, Bisphenol-A, und Methylendiphenol. Die phenolischen Hydroxylgruppen können mit Alkylgruppen substituiert sein. Beispiele für die Kondensationsprodukte aus Phenolen und Aldehyden sind Benzyletherharze, Novolake und Resole. Bei der Herstellung der Kondensationsprodukte können auch Cardol und/oder Cardanol oder deren Derivate oder Oligomere alleine oder in Kombination mit anderen Phenolen mit Aldehyden kondensiert werden. Als Aldehyd können Aldehyd enthaltende Verbindungen, wie Formaldehyd, Acetaldehyd, Propionaldehyd, Glyoxal, Acrolein, oder Aldehydspender, wie zum Beispiel Paraformaldehyd oder Hexamethylentetramin, verwendet werden. Diese Harze enthalten mindestens 2, vorzugsweise 2 bis 8 Hydroxylgruppen im Molekül. Besonders bevorzugt sind Benzyletherharze, die aus Einheiten der Formel (VI) 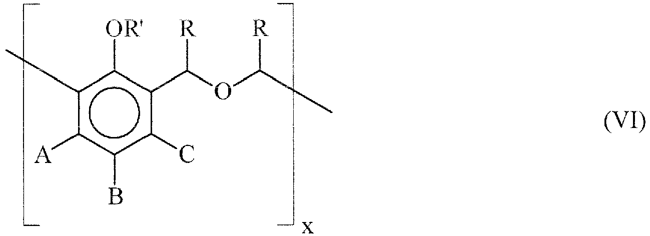 aufgebaut sind, wobei A, B, und C gleich oder verschieden sein können und jeweils ein Wasserstoff- oder Halogenatom, einen C₁- bis C₁₀-Kohlenwasserstoffrest, einen C₁- bis C₁₀-Oxykohlenwasserstoffrest, eine Methylolgruppe, einen Isopropylidenphenol- oder Methylenphenolrest bedeuten und wenn A, B, oder C eine Hydroxyfunktionalität aufweist, kann diese mit einem C₁- bis C₁₀-Kohlenwassserstoffrest verethert sein; R ein Wasserstoffatom oder ein C₁- bis C₁₀-Kohlenwasserstoffrest ist; R' ein Wasserstoffatom oder ein C₁- bis C₁₀-Kohlenwasserstoffrest ist und x im Bereich von 1 bis 15 ist.

Vorzugsweise sind A, B und C unabhängig voneinander eine Methyl-, Butyl-, Octyl- oder Nonylgruppe, und besonders bevorzugt eine Methylgruppe. R ist vorzugsweise ein Wasserstoffatom. R' ist vorzugsweise eine Methyl-, Butyl-, Octyl- oder Nonylgruppe, und besonders bevorzugt eine Methylgruppe. Besonders bevorzugt ist, dass A, B und C unabhängig voneinander eine Methyl-, Butyl-, Octyl- oder Nonylgruppe darstellen, R ein Wasserstoffatom ist und R' eine Methyl-, Butyl-, Octyl- oder Nonylgruppe ist. Noch stärker bevorzugt sind A, B, C und R' jeweils eine Methylgruppe und R ist ein Wasserstoffatom.

Das Kondensationsprodukt aus Phenolen und Aldehyden (Harzbestandteil) ist in der Polyolkomponente vorzugsweise in einer Menge von ca. 10 bis ca. 90 Gew.%, vorzugsweise von ca. 20 bis ca. 70 Gew.% bezogen auf die Polyolkomponente enthalten. Bei einem Gehalt unter 10 Gew.% kann die Festigkeit der wasserdurchlässigen Überzüge nachlassen, während bei einem Harzanteil über 90 Gew.% die Elastizität der Überzüge abnehmen kann.

Die Polyolkomponente umfasst als Basispolyol vorzugsweise mindestens eine Verbindung ausgewählt aus Cardol oder Cardanol, deren Derivaten oder deren Oligomeren und gegebenenfalls ein Kondensationsprodukt aus Phenolen und Aldehyden.

Zusätzlich zu dem Basispolyol kann die Polyolkomponente einen Hydroxylgruppen enthaltenden Weichmacher und gegebenenfalls ein Hydroxylgruppen enthaltendes Verdünnungsmittel enthalten.

Als Hydroxylgruppen enthaltender Weichmacher eignen sich die in der Polyurethanchemie zu diesem Zweck eingesetzten Stoffe, wie z.B. langkettige aliphatische Alkohole und deren Derivate, wie hydroxyfunktionelle Polyether und Polyester, wobei insbesondere mit Rizinusöl und Polyetherpolyolen hervorragend elastische Überzüge mit den gewünschten "Slow Release"-Eigenschaften erhalten werden, ohne dass diese Weichmacher aus der Hülle migrieren können und dadurch eine nachträgliche Versprödung hervorrufen.

Zur Einstellung der Viskosität der Beschichtungsmasse kann der Polyolkomponente erforderlichenfalls ein Hydroxylgruppen enthaltendes Verdünnungsmittel zugesetzt werden. Auch hierbei können die in der Polyurethanchemie üblicherweise für diesen Zweck verwendeten Stoffe eingesetzt werden, z.B. monofunktionelle Alkohole wie Butanol oder Diacetonalkohol, oder Glycerin, Ethylenglycol, Diethylenglycol, Butandiol.

Die verwendeten relativen Mengen von Weichmacher und Verdünnungsmittel sind nicht besonders kritisch. Die Mengen der beiden Stoffe ergeben zusammen mit den vorstehend erläuterten Basispolyol die erfindungsgemäß eingesetzte Polyolkomponente. Weichmacher und Verdünnungsmittel sind in der Polyolkomponente vorzugsweise in einer Menge von ca. 10 bis ca. 90 Gew.%, vorzugsweise von ca. 20 bis ca. 70 Gew.% bezogen auf die Polyolkomponente enthalten.

Vorzugsweise enthält die Polyolkomponente von ca. 10 bis ca. 40 Gew.% eines Basispolyols, von ca. 40 bis ca. 70 Gew.% eines Weichmachers und von ca. 5 bis ca. 20 Gew.% eines Verdünnungsmittels. Besonders bevorzugt enthält die Polyolkomponente von ca. 25 bis ca. 35 Gew.% eines Kondensationsproduktes aus Phenolen und Aldehyden, von ca. 5 bis ca. 15 Gew.% Cardanol, von ca. 50 bis ca. 60 Gew.% Rizinusöl, und von ca. 5 bis ca. 10 Gew.% Diethylenglykol.

Zur Verhinderung unerwünschter Blasenbildung aus der Nebenreaktion der Isocyanate mit Wasserspuren können der erfindungsgemäßen Polyolkomponente optional weitere übliche Additive wie Trocknungsmittel (beispielsweise Zeolithe oder andere Molekularsiebe, oder ortho-Ameisensäureester), Benetzungshilfsmittel, wie z.B. Tenside, Verlaufshilfsmittel, wie z.B. auf Silikon basierende Additive wie Polysiloxane oder Silikonadditive, Wachse, Verarbeitungszeitregler, wie z.B. Säuren und Basen, oder Hydrophobierungsmittel, wie z.B. Wachse, zugesetzt werden. Ebenso ist die Zugabe von Pigmenten und/oder Farbpasten zum Polyol zur farblichen Kenntlichmachung der Harzhülle möglich.

Als Isocyanatkomponente für die Herstellung der erfindungsgemäßen Polyurethanbeschichtung, die auf den körnigen Stoff aufgebracht wird, können aliphatische, cycloaliphatische, aromatische und heterocyclische Isocyanate mit mindestens zwei Isocyanatgruppen in einem Molekül oder deren Oligomere oder deren Polymere verwendet werden.

Beispiele dafür sind Toluol-2,4-diisocyanat; Toluol-2,6-Diisocyanat; 3-Phenyl-2-ethylendiisocyanat, 1,5-Naphthalindiisocyanat; 4-Methoxy-1,3-diphenyldiisocyanat; 4-Chlor-1,3-phenyldiisocyanat; Diphenylmethan-4,4'-diisocyanat; Diphenylmethan-2,2'-diisocyanat; 4-Brom-1,3-phenyldiidocynat; 4-Ethoxy-1,3-phenyldiisocynat; 2.4'-Diisocyanat-diphenylether; 5,6-Dimethyl-1,3-phenyldiisocyanat; 2,4-Dimethyl-1,3-phenyldiisocyanat; 4,4'-Diisocyanatodiphenylether, 4,6-Dimethyl-1,3-phenyldiisocyanat; 9,10-Anthracen-diisocyanat, 2,4,6,-Toluoltriisocyanat; 2,4.4'-Triisocyanatodiphenylether; 1,4-Tetramethylendiisocyanat; 1,6-Hexamethylendiisocyanat; 1,10-Decamethylendiisocyanat; 1,3-Cyclohexylendiisocyanat; 4,4'-bis-(Cyclohexylisocyanat); Xyloldiisocyanat; 1-Isocyanato-3-methylisocyanato-3,5,5-trimethylcyclohexan (Isophorondiisocyanat); 1,3-Bis-(isocyanato-1-methylethyl)benzol (m-TMXDI); 1,4-Bis-(isocyanato-1-methylethyl)benzol (p-TMXDI).

Bevorzugt sind aromatische Isocyanate wie Toluoldiisocyanat, Diphenylmethandiisocyanat (MDI) usw. sowie auf dem Fachgebiet übliche Oligomere auf dieser Basis.

Je nach den gewünschten Eigenschaften des Endprodukts werden zur Umhüllung von ca. 0,5 Gew.% bis ca. 20 Gew.%, vorzugsweise von ca. 1 Gew.% bis ca. 15 Gew.% und besonders bevorzugt von ca. 1 Gew.% bis ca. 10 Gew.% der Polyolkomponente eingesetzt, bezogen auf das Gewicht des körnigen Stoffes ohne Beschichtung.

Das Verhältnis von Polyol- zu Isocyanatkomponente wird üblicherweise so gewählt, dass ein Unterschuss an Hydroxylgruppen von ca. 30 Mol% bis zu einem Überschuss von ca. 30 Mol% besteht, also ein stöchiometrisches Verhältnis von ca. 1,3:1 bis ca. 1:1,3, vorzugsweise ca. 1,2:1 bis ca. 1:1,2. Die Praxis hat gezeigt, dass ein Verhältnis von ca. 1:1 für die spätere Anwendung nicht notwendigerweise zum besten Ergebnis führt. Bei der stöchiometrischen Betrachtung des Verfahrens müssen ggf. die Isocyanat-reaktiven funktionellen Gruppen des Katalysators mit in Betracht gezogen werden.

Zur Beschleunigung der Härtungsreaktion der Polyolkomponente mit der Isocyanatkomponente wird gemäß der vorliegenden Erfindung ein Katalysator eingesetzt, wobei der Katalysator mindestens eine Hydroxylgruppen enthaltende Aminverbindung der allgemeinen Formel (I) umfasst: 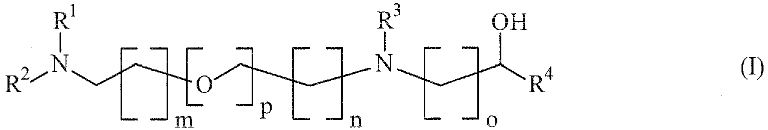 wobei R¹ ein C₁- bis C₄-Alkylrest ist; R² ein C₁- bis C₄-Alkylrest ist; R³ ein C₁- bis C₄-Alkylrest, ein Rest -(CH₂)_{q}-CH(OH)R⁵ oder ein Rest -CH₂-(CH₂)ᵣ₋NR⁶R⁷ ist; R⁴ ein Wasserstoffatom oder ein C₁- bis C₄-Alkylrest ist; R⁵ ein Wasserstoffatom oder ein C₁- bis C₄-Alkylrest ist; R⁶ ein C₁- bis C₄-Alkylrest ist; R⁷ ein C₁- bis C₄-Alkylrest ist; m eine ganze Zahl von 0 bis 10 ist; n eine ganze Zahl von 0 bis 10 ist; o eine ganze Zahl von 1 bis 10 ist; p eine ganze Zahl von 0 bis 10 ist; q eine ganze Zahl von 1 bis 10 ist; und r eine ganze Zahl von 0 bis 10 ist.

R¹ ist vorzugsweise eine Methyl- oder Ethylgruppe, besonders bevorzugt eine Methylgruppe. R² ist vorzugsweise eine Methyl- oder Ethylgruppe, besonders bevorzugt eine Methylgruppe. R³ ist vorzugsweise eine Methyl- oder Ethylgruppe, ein Rest -(CH₂)_{q}-CH(OH)R⁵ oder ein Rest -CH₂-(CH₂)ᵣ-NR⁶R⁷. R⁴ ist vorzugsweise ein Wasserstoffatom oder eine Methylgruppe. R⁵ ist vorzugsweise ein Wasserstoffatom oder eine Methylgruppe. R⁶ ist vorzugsweise eine Methyl- oder Ethylgruppe, besonders bevorzugt eine Methylgruppe. R⁷ ist vorzugsweise eine Methyl- oder Ethylgruppe, besonders bevorzugt eine Methylgruppe, m ist vorzugsweise eine ganze Zahl von 0 bis 4, besonders bevorzugt 1 oder 2. n ist vorzugsweise eine ganze Zahl von 0 bis 4, besonders bevorzugt 0 oder 1. o ist vorzugsweise eine ganze Zahl von 1 bis 4, und besonders bevorzugt ist o gleich 1. p ist vorzugsweise eine ganze Zahl von 0 bis 4, besonders bevorzugt 0 oder 1. q ist vorzugsweise eine ganze Zahl von 1 bis 4, und besonders bevorzugt 1 oder 2. r ist vorzugsweise eine ganze Zahl von 0 bis 10, und besonders bevorzugt 1 oder 2.

Besonders bevorzugt ist eine Hydroxylgruppen enthaltende Aminverbindung der allgemeinen Formel (I), wobei R¹ eine Methyl- oder Ethylgruppe ist; R² eine Methyl- oder Ethylgruppe ist; R³ eine Methyl- oder Ethylgruppe, ein Rest -(CH₂)_{q}-CH(OH)R⁵ oder ein Rest -CH₂-(CH₂)R⁶R⁷ ist; R⁴ ein Wasserstoffatom oder eine Methylgruppe ist; R⁵ ein Wasserstoffatom oder eine Methylgruppe ist; R⁶ eine Methyl- oder Ethylgruppe ist; R⁷ eine Methyl- oder Ethylgruppe ist; m eine ganze Zahl von 0 bis 4 ist; n eine ganze Zahl von 0 bis 4 ist; o eine ganze Zahl von 1 bis 4 ist; p eine ganze Zahl von 0 bis 4 ist; q eine ganze Zahl von 1 bis 4 ist; und r eine ganze Zahl von 0 bis 4 ist. Noch stärker bevorzugt ist ein Amin der allgemeinen Formel (I), wobei R¹ eine Methylgruppe ist; R² eine Methylgruppe ist; R³ eine Methylgruppe, ein Rest -(CH₂)_{q}-CH(OH)R⁵ oder ein Rest -CH₂-(CH₂)ᵣ-NR⁶R⁷ ist; R⁴ ein Wasserstoffatom oder eine Methylgruppe ist; R⁵ ein Wasserstoffatom oder eine Methylgruppe ist; R⁶ eine Methylgruppe ist; R⁷ eine Methylgruppe ist; m 1 oder 2 ist; n 0 oder 1 ist; o gleich 1 ist; p 0 oder 1 ist; q 1 oder 2 ist; und r 1 oder 2 ist.

In einer bevorzugten Ausführungsform ist die Hydroxylgruppen enthaltende Aminverbindung aus Verbindungen der allgemeinen Formeln (II), (III), (IV) und (V): 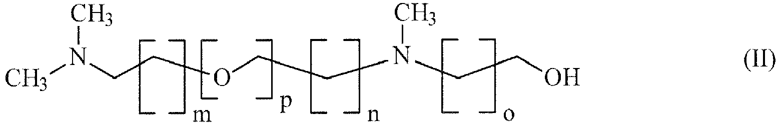 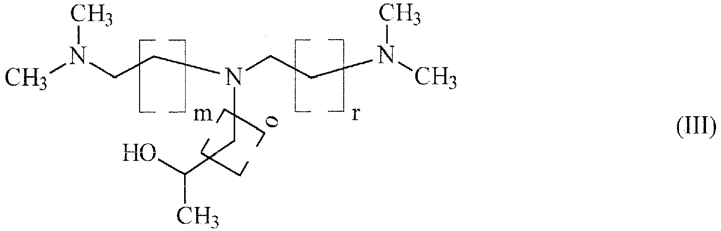 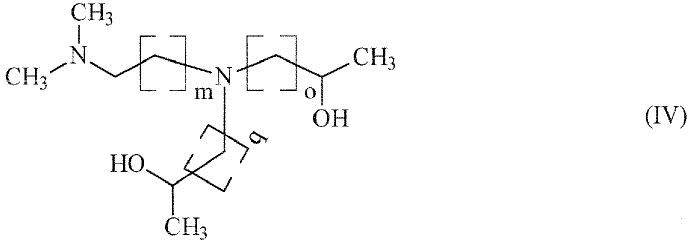 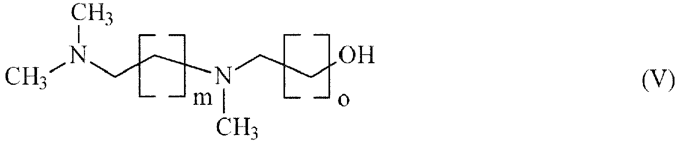 wobei m, n, o, p, q und r wie oben definiert sind, ausgewählt ist. Dabei sind Hydroxylgruppen enthaltende Aminverbindungen der allgemeinen Formel (V) ganz besonders bevorzugt. Besonders bevorzugt ist die Hydroxylgruppen enthaltende Aminverbindung aus Verbindungen der allgemeinen Formeln (II), (III), (IV) und (V) ausgewählt, wobei m eine ganze Zahl von 0 bis 4 ist; n eine ganze Zahl von 0 bis 4 ist; o eine ganze Zahl von 1 bis 4 ist; p eine ganze Zahl von 0 bis 4 ist; q eine ganze Zahl von 1 bis 4 ist; und r eine ganze Zahl von 0 bis 4 ist. Noch stärker bevorzugt ist die Hydroxylgruppen enthaltende Aminverbindung aus Verbindungen der allgemeinen Formeln (II), (III), (IV) und (V) ausgewählt, wobei R¹ eine Methylgruppe ist; R² eine Methylgruppe ist; R³ eine Methylgruppe, ein Rest -(CH₂)-CH(OH)R⁵ oder ein Rest -CH₂-(CH₂)ᵣ-NR⁶R⁷ ist; R⁴ ein Wasserstoffatom oder eine Methylgruppe ist; R⁵ ein Wasserstoffatom oder eine Methylgruppe ist; R⁶ eine Methylgruppe ist; R⁷ eine Methylgruppe ist; m 1 oder 2 ist; n 0 oder 1 ist; o gleich 1 ist; p 0 oder 1 ist; q 1 oder 2 ist; und r 1 oder 2 ist.

Ganz besonders bevorzugte Hydroxylgruppen enthaltende Aminverbindungen sind aus Verbindungen der Formeln (IIa), (IIIa), (IVa) und (Va) ausgewählt:

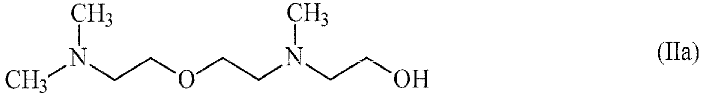

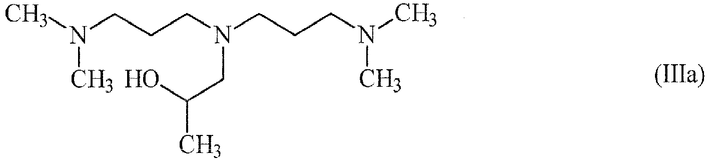

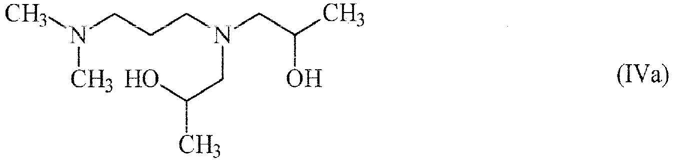

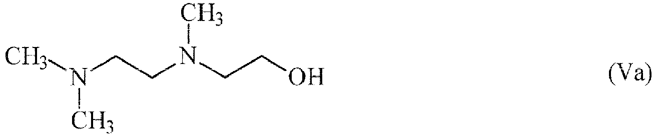

Der Katalysator umfasst die Hydroxylgruppen enthaltende Aminverbindung der allgemeinen Formel (I) vorzugsweise in einer Menge von mindestens ca. 30 Gew.%, stärker bevorzugt in einer Menge von mindestens ca. 50 Gew.%, noch stärker bevorzugt in einer Menge von mindestens ca. 70 Gew.%, und am stärksten bevorzugt in einer Menge von mindestens ca. 90 Gew.% bezogen auf die Gesamtmenge an Katalysator. Vorzugsweise umfasst der Katalysator eine Hydroxylgruppen enthaltende Aminverbindung, die aus Verbindungen der allgemeinen Formeln (II), (III), (IV) und (V) ausgewählt, ist in einer Menge von mindestens ca. 30 Gew.%, stärker bevorzugt in einer Menge von mindestens ca. 50 Gew.%, noch stärker bevorzugt in einer Menge von mindestens ca. 70 Gew.%, und am stärksten bevorzugt in einer Menge von mindestens ca. 90 Gew.% bezogen auf die Gesamtmenge an Katalysator. Insbesondere umfasst der Katalysator eine Hydroxylgruppen enthaltende Aminverbindung, die aus Verbindungen der allgemeinen Formeln (IIa), (IIIa), (IVa) und (Va) ausgewählt ist, vorzugsweise in einer Menge von mindestens ca. 30 Gew.%, stärker bevorzugt in einer Menge von mindestens 50 ca. Gew.%, noch stärker bevorzugt in einer Menge von mindestens ca. 70 Gew.%, und am stärksten bevorzugt in einer Menge von mindestens ca. 90 Gew.% bezogen auf die Gesamtmenge an Katalysator.

In einer bevorzugten Ausführungsform umfasst die Polyolkomponente mindestens eine Verbindung, ausgewählt aus Cardol und/oder Cardanol oder deren Derivaten oder Oligomeren oder Mischungen daraus, und der Katalysator umfasst eine Hydroxylgruppen enthaltende Aminverbindung, die aus den allgemeinen Formeln (II), (III), (IV) und (V) ausgewählt ist. In dieser Ausführungsform umfasst die Polyolkomponente mindestens eine Verbindung ausgewählt aus Cardol und/oder Cardanol oder deren Derivaten oder Oligomeren oder Mischungen daraus vorzugsweise zu einem Anteil von ca. 7 bis ca. 70 Gew.%, besonders bevorzugt von ca. 10 bis ca. 35 Gew.%. Der Katalysator umfasst in dieser Ausführungsform die Hydroxylgruppen enthaltende Aminverbindung der allgemeinen Formel (I) vorzugsweise in einer Menge von mindestens ca. 30 Gew.%, stärker bevorzugt in einer Menge von mindestens ca. 50 Gew.%, noch stärker bevorzugt in einer Menge von mindestens ca. 70 Gew.%, und am stärksten bevorzugt in einer Menge von mindestens ca. 90 Gew.% bezogen auf die Gesamtmenge an Katalysator.

Zusätzlich zu der Hydroxylgruppen enthaltenen Aminverbindung der allgemeinen Formel (I) kann der zur Beschleunigung der Härtungsreaktion eingesetzte Katalysator weitere aus der Polyurethanbeschichtung bekannte Katalysatoren umfassen, z.B. Amine, aber auch Metallkatalysatoren. Bei den Aminen kann es sich sowohl um solche Stoffe handeln, die in das Harz einreagieren können, als auch solche deren chemische Struktur dies nicht ermöglicht.

Als Aminkatalysatoren eignen sich grundsätzlich alle aminofunktionellen Substanzen wie aliphatisch, cycloaliphatische, heterocyclische und/oder aromatische Amine. Es sind sowohl primäre, sekundäre und tertiäre Monoamine als auch Polyamine mit primären, sekundären und tertiären Aminogruppen verwendbar. Nicht limitierende Beispiele von geeigneten Aminkatalysatoren sind 1,3,5-Tris(3-(dimethylamino)propyl)-hexahydro-*s*-triazin, 2,2'-Dimorpholinodiethylether, N-Methylmorpholin, N-Ethylmorpholin, Benzyldimethylamin, N,N-Dimethylcyclohexylamin, Pentamethyldiethylentriamin, N,N,N',N",N"-Pentamethyl-dipropylentriamin, Bis-(2-methylaminoethyl)ether, und Diazabicyclooctan.

Bevorzugt werden solche Katalysatoren eingesetzt, die in das Beschichtungsharz einreagieren (reaktive Katalysatoren). Der Vorteil der reaktiven Katalysatoren besteht darin, dass sie bei der späteren Verwendung der umhüllten körnigen Stoffe, z.B. als Langzeitdünger, nicht aus der Umhüllungsschicht herausgelöst werden können. Es eignen sich alle funktionellen Amine mit einer oder mehreren primären, sekundären und tertiären Aminogruppen. Die funktionellen Amine können Imino-, Hydroxy-, Hydrazino-, Hydrazono, Hydroxyimino- und/oder Sulfanylfunktionalitäten enthalten. Die bevorzugte Ausführung sind hydroxyfunktionelle Amine. Nicht limitierende Beispiele von geeigneten funktionellen Aminkatalysatoren sind Triethanolamin, Dimethylethanolamin, Vinylimidazol, 2-(2-Dimethylaminoethoxy)ethanol, 1,3-Propandiamin, 3'-Iminobis(N,N-dimethylpropylamin), und Tetramethylguanidin. Die Hydroxylgruppen enthaltenden Aminverbindungen der allgemeinen Formel (I) zählen auch zu den reaktiven Katalysatoren.

Als Metallkatalysatoren eigenen sich grundsätzlich die Salze der Elemente Zinn, Bismut, Eisen, Zink bevorzugt in Kombination mit organischen Carboxylaten. Von den geeigneten Metallkatalysatoren seien die folgenden Beispiele genannt: Dibutylzinnlaurat, Dioctylzinndilaurat, Dioctylzinnacetat, Zinkneodecanoat, Eisen(II)chlorid, Eisen(III)chlorid, Zinkchlorid, und Bismutoctoat.

Um bestimmte Härtungseigenschaften zu erreichen, können auch zwei oder mehrere Katalysatoren miteinander gemischt werden, wobei diese unterschiedlichen Verbindungsklassen angehören können. Zur Steigerung der Aktivität können ein oder mehrere Katalysatoren zusätzlich in die erfindungsgemäße Polyolkomponente und/oder Isocyanatkomponente zugegeben werden, wobei diese unterschiedlichen Verbindungsklassen angehören können.

Vorzugsweise werden die Katalysatoren in flüssiger Form eingesetzt. Die Zugabe der jeweiligen Katalysatoren oder Katalysatormischungen erfolgt als separate Komponente. Das Aufbringen kann durch Zutropfen oder als fein verteilter Nebel durch Sprühen erfolgen. Dies schließt die Verwendung von Katalysatoren mit ein, die bei der Arbeitstemperatur fest sind, aber vor ihrer Verwendung in einem geeigneten Lösemittel oder einem Weichmacher gelöst wurden oder aufgeschmolzen wurden. Auch bei der Arbeitstemperatur flüssige Katalysatoren können mit geeigneten Lösemitteln und/oder Weichmachern versetzt werden, z.B. um auf diese Weise die Reaktionsgeschwindigkeit zu beeinflussen.

Durch den Einsatz von geeigneten Katalysatoren in flüssiger Form müssen die Beschichtungsanlagen nicht explosionsgeschützt sein, wenn der Flammpunkt der Katalysatoren über der Arbeitstemperatur liegt. Weiterhin muss kein Gasstrom nach dem Austritt aus der Beschichtungsapparatur einer besonderen Nachbehandlung zugeführt werden, bei der die Amine aus der Abluft entfernt werden. Auch an die Dichtigkeit der gesamten Anlage inklusive der Zu- und Ableitungen werden daher keine erhöhten Anforderungen gestellt. Weiterhin muss, wenn die Umhüllung schichtweise erfolgt, die Anlage vor dem Aufbringen jeder neuen Schicht nicht völlig katalysatorfrei gespült werden, um eine vorzeitige Reaktion der Polyol- und der Isocyanatkomponenten miteinander zu verhindern, wie es beim Einsatz von gasförmigen Katalysatoren notwendig ist. Dadurch kann die nötige Katalysatormenge reduziert werden. Dies alles führt zu enormen Kosteneinsparungen.

Vorzugsweise weisen die Katalysatoren einen Flammpunkt auf, der mindestens ca. 10 °C oberhalb der Arbeitstemperatur, insbesondere mindestens ca. 15 °C oberhalb der Arbeitstemperatur, besonders bevorzugt mindestens ca. 20 °C oberhalb der Arbeitstemperatur liegt.

Die zur Aushärtung der Polyol- und der Isocyanatkomponente benötigte Katalysatormenge hängt von der gewünschten Aushärtezeit und von der Arbeitstemperatur ab. Im Allgemeinen werden von ca. 0,1 Gew.% bis ca. 20 Gew.% eingesetzt, vorzugsweise von ca. 1 bis ca. 10 Gew.%. und besonders bevorzugt von ca. 3 bis ca. 6 Gew.%, bezogen auf die eingesetzte Gesamtmenge aus der Menge der Polyolkomponente und der Menge der Isocyanatkomponente.

Vorzugsweise enthält die Polyolkomponente von ca. 10 bis ca. 40 Gew.% eines Basispolyols, von ca. 40 bis ca. 70 Gew.% eines Weichmachers und von ca. 5 bis ca. 20 Gew.% eines Verdünnungsmittels, die Menge an Katalysator beträgt von ca. 0,1 Gew.% bis ca. 20 Gew.% bezogen auf die eingesetzte Gesamtmenge aus der Menge der Polyolkomponente und der Menge der Isocyanatkomponente, und der Katalysator umfasst eine Hydroxylgruppen enthaltende Aminverbindung, die aus den allgemeinen Formeln (II), (III), (IV) und (V) ausgewählt ist, in einer Menge von mindestens ca. 30 Gew.%.

Besonders bevorzugt enthält die Polyolkomponente von ca. 25 bis ca. 40 Gew.% eines Kondensationsproduktes aus Phenolen und Aldehyden, von ca. 5 bis ca. 15 Gew.% Cardanol, von ca. 50 bis ca. 60 Gew.% Rizinusöl, und von ca. 5 bis ca. 10 Gew.% Diethylenglykol, das Molverhältnis der Polyolkomponente zur Isocyanatkomponente beträgt von ca. 1,2:1 bis ca. 1:1,2, die Menge an Katalysator beträgt von ca. 3 Gew.% bis ca. 6 Gew.% bezogen auf die eingesetzte Gesamtmenge aus der Menge der Polyolkomponente und der Menge der Isocyanatkomponente, und der Katalysator umfasst eine Hydroxylgruppen enthaltende Aminverbindung, die aus den allgemeinen Formeln (II), (III), (IV) und (V) ausgewählt ist, in einer Menge von mindestens ca. 70 Gew.%.

Außerdem kann die Umhüllungsschicht Additive enthalten, welche zuvor nicht in der Polyol- und/oder der Isocyanatkomponente gelöst wurden, da sie z.B. in keiner der beiden Komponenten löslich oder nicht mit ihnen verträglich sind. Dies können u.a. Wirkstoffe sein, die gezielt in der Harzschicht und nicht im umhüllten Korn vorhanden sein sollen. Diese Wirkstoffe sind beispielsweise Spurenelemente, wie z.B. Bor, Kupfer, Mangan Zink, Magnesium, Calcium, Eisen, Cobalt, und Molybdän.

Weiterhin betrifft die vorliegende Erfindung ein Verfahren zum Beschichten eines körnigen Stoffes, umfassend die Schritte (a) Bereitstellen eines körnigen Stoffes; (b) Bereitstellen einer Polyolkomponente und einer Isocyanatkomponente; (c) wahlweise Mischen der Polyolkomponente mit der Isocyanatkomponente; (d) Zugabe der Mischung aus Schritt (c) oder der Polyolkomponente und der Isocyanatkomponente als Einzelstoffe zu dem bereitgestellten körnigen Stoff und Erzeugen einer Beschichtung auf dem körnigen Stoff; (e) Härten der Beschichtung; (f) wahlweise Wiederholen der Schritte (d) und (e). Der Katalysator zum Härten der Verbindung kann vor den Schritten (c) und (d) der Polyolkomponente zugegeben werden, oder im Schritt (e) zugefügt werden. Der Katalysator umfasst eine Hydroxylgruppen enthaltende Aminverbindung der obigen allgemeinen Formel (I). Bevorzugt ist ein Verfahren zum Beschichten eines körnigen Stoffes, umfassend die Schritte (a) Bereitstellen eines körnigen Stoffes; (b) Bereitstellen einer Polyolkomponente und einer Isocyanatkomponente; (c) wahlweise Mischen der Polyolkomponente mit der Isocyanatkomponente; (d) Zugabe der Mischung aus Schritt (c) oder der Polyolkomponente und der Isocyanatkomponente als Einzelstoffe zu dem bereitgestellten körnigen Stoff und Erzeugen einer Beschichtung auf dem körnigen Stoff; (e) Zufügen eines Katalysators zum Härten der Beschichtung; (f) wahlweise Wiederholen der Schritte (d) und (e), wobei der Katalysator eine Hydroxylgruppen enthaltende Aminverbindung der obigen allgemeinen Formel (I) umfasst. In dem erfindungsgemäßen Verfahren werden vorzugsweise die oben beschriebenen bevorzugten Polyolkomponenten. Isocyanatkomponenten und Hydroxylgruppen enthaltenen Aminverbindungen in den entsprechenden Mengen verwendet.

Im erfindungsgemäßen Verfahren erfolgt die Zugabe des Katalysators vorzugsweise als separate Komponente im Schritt (e). Somit ist es nicht nötig, dass der eingesetzte Katalysator in einem ausreichenden Maß in der Polyolkomponente löslich ist. Es kann auch nicht zu einer Phasentrennung oder zu einer Ausfällung in der Polyolkomponente kommen. Weiterhin wird durch diese Verfahrensweise ausgeschlossen, dass die Aushärtung schon beginnt, bevor die beiden Reaktionspartner gleichmäßig um das zu beschichtende Korn verteilt sind. Da der Katalysator in die Harzmatrix einreagiert, ist eine optimale Verteilung des Katalysators vorteilhaft.

Besonders bevorzugt erfolgt die Zugabe des Katalysators im Schritt (e) in Form eines Sprühnebels. Die Erzeugung des Sprühnebels ist unkritisch und kann nach allen gängigen Verfahren durchgeführt werden. Der Sprühnebel kann beispielsweise durch Versprühen mit Druckluft oder airless Spritzen erfolgen. Um eine optimale Verteilung des Sprühnebels zu gewährleisten, können auch mehrere Düsen über dem Granulatbett angebracht werden. Der Sprühnebel wird durch vernebeln des Katalysators, der das flüssige Amin enthält, erzeugt. Durch Verwendung des Sprühverfahrens kann eine noch bessere Durchhärtung erzielt werden, als bei Zugabe des Katalysators in flüssiger Form. Dies führt zu einer höheren Aushärtungsgeschwindigkeit der Beschichtung und beim beschichteten körnigen Stoff zu niedrigeren Abgaberaten des Wirkstoffs.

Der Sprühnebel kann beispielsweise direkt aus dem flüssigen Katalysator mit einer airless Sprühdüse mit einem Druck von 2 bis 10 bar, vorzugsweise 3 bis 5 bar, bei einem Volumenstrom von 10 bis 30 ml/s bezogen auf den flüssigen Katalysator erzeugt werden. Die erforderliche Katalysatormenge bezogen auf die Harzmenge beträgt ca. 0,1 Gew.% bis ca. 20 Gew.%, vorzugsweise ca. 1 bis ca. 10 Gew.%. und besonders bevorzugt ca. 3 bis ca. 6 Gew.%, bezogen auf die eingesetzte Gesamtmenge aus der Menge der Polyolkomponente und der Menge der Isocyanatkomponente. Die Zugabedauer des Katalysators sollte vorzugsweise weniger als 1 Minute betragen.

Der hochkonzentrierte Sprühnebel ermöglicht es, im Gegensatz zu einer Begasung mit nur einem verdünnten Amin-Luft-Gemisch, gleichzeitig an allen Reaktionsstellen auf die gesamte aufgebrachte Hüllmasse eine so hohe Katalysatormenge aufzubringen, dass eine gleichzeitige, spontane Aushärtung auf jedem Einzelkorn stattfinden kann.

Dabei wird die äußerst empfindliche Gelphase, die den Übergang darstellt zwischen frei fließender Harzmischung und klebfreier Lackoberfläche, extrem schnell ohne Zerstörung der gerade auszubildenden Lackhülle durchlaufen.

Dieses Ergebnis ist überraschend, da eigentlich zu erwarten gewesen wäre, dass es an den Stellen, an denen der Katalysator auf die noch nicht gehärtete Harzschicht trifft, auf Grund seiner hohen Konzentration zu einer äußerst raschen Härtung kommt und der Katalysator dabei zumindest teilweise eingeschlossen wird, so dass er für die weitere Härtungsreaktion nicht oder nur in geringem Maße zur Verfügung steht.

Bei Bedarf können die oben erwähnten Additive vor dem Schritt (c) mit der Polyolkomponente gemischt werden, im Schritt (d) zusammen mit der Polyolkomponente und der Isocyanatkomponente oder dem Gemisch davon auf den körnigen Stoff aufgetragen werden, oder nach dem Schritt (d) und vor dem Schritt (e) zugefügt werden. Wenn mehrere Schichten aufgetragen werden, können die Additive allen oder nur einzelnen Schichten, zum Beispiel nur der äußeren Schicht, zugefügt werden.

Die Umhüllung lässt sich am einfachsten in einer rotierenden Trommel vornehmen, bei der das zu beschichtende Material während des gesamten Beschichtungsvorgangs in Bewegung gehalten wird. Die Polyol- und die Isocyanatkomponente werden vorgemischt oder getrennt, gleichzeitig oder nacheinander dem zu beschichtenden Material zugegeben und homogen darauf verteilt. Falls Additive in die Umhüllung eingelagert werden sollen, können diese vor, während oder nach der Harzzugabe chargiert werden.

An Stelle einer rotierenden Trommel können auch andere Beschichtungsanlagen gewählt werden, z.B. Wirbelschichtanlagen oder röhrenförmige Apparaturen, in denen die Umhüllung entweder durch Rotation der Röhre und/oder durch rotierende Einbauten erfolgt. Ebenso ist ein kontinuierliches Beschichtungsverfahren mit einer Förderschnecke möglich.

Die "Arbeitstemperatur" ist die Temperatur, bei der die Schritte (d) und (e) durchgeführt werden. Die Arbeitstemperatur liegt dabei vorzugsweise von ca. 10°C bis ca. 160°C, stärker bevorzugt von ca. 20°C bis ca. 100°C, und besonders bevorzugt von ca. 30°C bis ca. 95°C.

Der Katalysator wird vorzugsweise in flüssiger Form in die Mischung eingebracht, sobald sich das Harz und ggfs. die Additive auf dem zu beschichteten Stoff homogen verteilt haben. Die Verweilzeit bis zur Katalysatorzugabe hängt dabei von der Effektivität des Mischaggregats, der Arbeitstemperatur, der Menge an zu beschichtendem Material und der Harz- sowie ggfs. der Additivmenge ab. Die Verweilzeit beträgt vorzugsweise von ca. 0 Sekunden bis ca. 3 Minuten, besonders bevorzugt 0 bis 1 Minuten.

Die Härtungsbedingungen, d.h. die Art und Menge des Katalysators bzw. Katalysatorgemischs sowie die Arbeitstemperatur werden vorzugsweise so gewählt, dass die Zeit bis zur vollständigen Aushärtung pro Beschichtung nicht länger als ca. 12 Min. dauert, stärker bevorzugt nicht länger als ca. 8 Min., besonders bevorzugt nicht länger als ca. 4 Min., und am stärksten bevorzugt nicht länger als ca. 2 Min. dauert. Die vollständige Aushärtung wird dabei so definiert, dass zu diesem Zeitpunkt der auf den körnigen Stoff aufgebrachte Harzfilm nicht mehr klebt.

Das Aufbringen des Harzes in der für die spätere Anwendung notwendigen Menge kann entweder in einem Schritt erfolgen oder die Umhüllung kann schichtenweise in mehreren Teilschritten erfolgen, wobei jede Teilschicht für sich gehärtet wird. Bei dieser Arbeitsweise ist es jedoch nicht erforderlich, vor dem Aufbringen einer weiteren Teilschicht so lange zu warten, bis die darunterliegende völlig ausgehärtet ist. Es kann sogar von Vorteil sein, die jeweils nächste Teilschicht zu einem Zeitpunkt aufzubringen, zu dem die vorherige nur teilgehärtet ist und damit noch die Möglichkeit eines Verbundes der Schichten besteht. Bei einem schichtenförmigen Aufbau der Umhüllung ist es denkbar, dass die einzelnen Teilschichten aus Harzen unterschiedlicher Zusammensetzung bestehen, und/oder dass Additive gezielt in eine bestimmte Schicht, z.B. die Äußere, eingelagert werden.

Der Beschichtungsprozess kann sowohl chargenweise als auch kontinuierlich gestaltet werden. Letzteres z.B. dadurch, dass in einer röhrenförmigen Apparatur eine oder mehrere Zonen zur Harz- und ggfs. Additivzugabe alternierend zu einer oder mehreren Zonen zur Katalysatorzugabe angeordnet sind. Alle Einzelschritte, d.h. Zugabe an unbeschichteten Körnern, Transport von einer Zone zur nächsten, Chargieren der Harze, ggfs. der Additive sowie der Katalysatoren und Entnahme der fertigen Endprodukte können bei einer solchen Anlage kontinuierlich erfolgen, so dass kein Zeitverlust durch Leeren und Wiederbefüllen der Anlage entsteht.

Andere Ausführungen von chargenweise oder kontinuierlich arbeitenden Beschichtungsanlagen sind durch die vorstehende Kurzbeschreibung nicht ausgeschlossen.

Der erfindungsgemäße beschichtete körnige Stoff ist vorzugsweise nach dem oben beschriebenen erfindungsgemäßen Verfahren zum Beschichten eines körnigen Stoffes erhältlich. Stärker bevorzugt wird der erfindungsgemäße beschichtete körnige Stoff nach dem erfindungsgemäßen Verfahren erhalten, wobei der Katalysator zum Härten der Verbindung im Schritt (e) zugefügt wird, und besonders bevorzugt wird der Katalysator im Schritt (e) in flüssiger Form zugeführt.

Die folgenden Beispiele erläutern die Erfindung, ohne sie einzuschränken.

### Beispiele

### Herstellungsbeispiel 1: Herstellung eines Phenolharzpräkondensates

In einem Reaktionskolben werden 458 g Phenol, 198 g Paraformaldehyd und 0,5 g Zinkacetat gemischt und unter Rückflussbedingungen auf 115 °C erhitzt und eine Stunde lang bei dieser Temperatur gehalten. Anschließend wird das entstehende Reaktionswasser abdestilliert. Die Ausbeute beträgt ca. 85%.

### Herstellungsbeispiel 2: Herstellung der Polyolkomponente

Zur Herstellung der Polyolkomponente werden 30 Gew.% des im Herstellungsbeispiel 1 erhältlichen Präkondensates mit 55 Gew.% Ricinusöl, 10 Gew.% Cardanol und 5 Gew.% Diethylenglykol gemischt.

### Herstellungsbeispiel 3: Bereitstellung der Isocyanatkomponente.

Die Isocyanatkomponente besteht aus einem Gemisch von Oligomeren und Isomeren auf der Basis von Diphenylmethandiisocyanat mit einem Isocyanatgehalt von ca. 29 bis ca.33% und einer Funktionalität von ca. 2,7.

### Beispiele 1 bis 4

Beschichtet werden 2 kg eines handelsüblichen NPK-Düngemittelgranulates 16-10-17 mit einer mittleren Korngröße von 4 mm. Die Beschichtung erfolgt in einem rotierenden Gefäß (mittlerer Durchmesser ca. 38 cm) bei einer Temperatur von 70°C. Der Dünger wird während des gesamten Beschichtungsvorgangs in Bewegung gehalten. Die Polyolkomponente aus Herstellungsbeispiel 2 wird in einer Menge von 1 Gew.% bezogen auf Düngemittelgranulat mit der Isocyanatkomponente aus Herstellungsbeispiel 3 in einer Menge von 1 Gew.% bezogen auf Düngemittelgranulat für A Sekunden homogen vermischt und die resultierende Reaktionsmischung innerhalb von B Sekunden gleichmäßig auf die zu beschichtenden Granulate gegeben, für C Sekunden homogen verteilt und anschließend durch Zutropfen von 0,1 Gew.% eines reaktiven Aminkatalysators bezogen auf Düngemittelgranulat gehärtet. Der Härtungsprozess dauert etwa D Sekunden bis das Material vollkommen rieselfähig ist und die nächste Schicht aufgetragen werden kann (siehe Tab. 1).

Die Menge an Beschichtungsmaterial beträgt insgesamt 10 Gew.% bezogen auf Düngemittelgranulat. Diese Menge wurde in mehreren Zyklen auf das Granulat in der beschriebenen Weise aufgetragen. Dabei wird das Harz nach jedem Beschichtungsvorgang gehärtet, um die Klebneigung zu verringern. Insgesamt wurden 5 Schichten aufgetragen.

In den Beispielen 1-4 wurden die folgenden Katalysatoren verwendet:

| | |
|---|---|
| Jeffcat Z-110: | N,N,N'-Trimethylaminoethyl-ethanolamin; |
| Jeffcat ZR-50: | N,N-Bis(3-dimethylaminopropyl)-N-isopropanolamin; |
| Jeffcat ZF-10: | N,N.N'-Trimethyl-N'-hydroxyethylbisaminoethylether; und |
| Jeffcat DPA: | N-(3-Dimethylaminopropyl)-N,N-diisopropanolamin. |

Die Katalysatoren werden von der Huntsman Corporation vertrieben.

**Tabelle 1:**

| Beispiel | Katalysator | A | B | C | D |
|---|---|---|---|---|---|
| 1 | Jeffcat Z-110 | 40 | 30 | 30 | 50 |
| 2 | Jeffcat ZR-50 | 40 | 30 | 30 | 600 |
| 3 | Jeffcat ZF-10 | 40 | 30 | 30 | 120 |
| 4 | Jeffcat DPA | 40 | 30 | 30 | 600 |

### Beispiel 5

Beispiel 1 wurde wiederholt, jedoch wurde als Katalysator ein Gemisch aus 50 Gew.% Jeffcat Z-110 und 50 Gew.% DBTL (Dibutylzinndilaurat) als Metallkatalysator verwendet.

### Beispiel 6

Beispiel 1 wurde wiederholt, jedoch wurde der Katalysator Jeffcat Z-110 mit einer Luftsprühpistole aufgesprüht und nicht zugetropft, wie in den Beispielen 1 bis 5 beschrieben.

### Vergleichsbeispiel 1

Beispiel 1 wurde wiederholt, jedoch wurde als Katalysator N,N-Dimethylethanolamin (DMEA) verwendet.

### Vergleichsbeispiel 2

Beispiel 1 wurde wiederholt, jedoch wurde als Katalysator ein Katalysator-Gas-Gemisch eingesetzt, welches aus bei 20 °C mit Dimethylisopropylamin gesättigtem Stickstoff bestand.

### Vergleichsbeispiel 3

Beispiel 1 wurde wiederholt, jedoch wurde Katalysator Jeffcat Z-110 der Polyolkomponente zugemischt, bevor diese mit der Isocyanatkomponente gemischt wurde.

### Beispiel 7: Bestimmung der Wirkstoffabgabe in siedendem Wasser

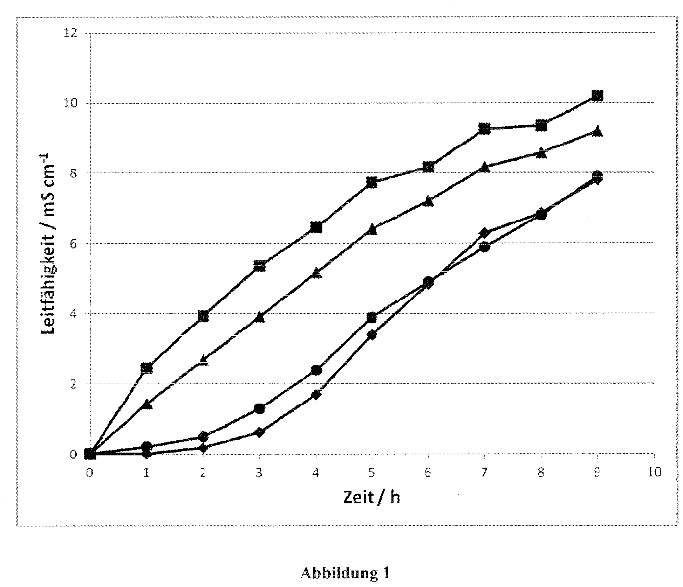

Die beschichteten Düngemittelgranulate aus Beispiel 1, Vergleichsbeispiel 1 und Vergleichsbeispiel 2 wurden untersucht. Zur Bestimmung der Wirkstoffabgabe werden 10 g des beschichteten Düngemittelgranulats in 850 mL siedendes VE-Wasser (demineralisiertes Wasser) gegeben (1 L, 3-Hals-Kolben inkl. Rückflusskühler) und für 9 h refluxiert. Die Wirkstofffreisetzung wird über den Leitfähigkeitsanstieg des Wassers bestimmt. Die ◆Ergebnisse sind der Abbildung 1 zu entnehmen (▲: Beispiel 1; ■: Vergleichsbeispiel 1; ◆: Vergleichsbeispiel 2; ●: Beispiel 6). Aus Abbildung 1 ist ersichtlich, dass die Freisetzungsraten der beschichteten Düngemittelgranulate einen vergleichbaren Verlauf zeigen. Als anwendungstechnischer Vorteil erweist sich der hohe Flammpunkt von Jeffcat Z110, sodass kein explosionsgeschütztes Equipment benötigt wird als auch das auf einen teuren Aminwäscher verzichtet werden kann.

### Beispiel 8: Bestimmung der Wirkstoffabgabe bei Raumtemperatur

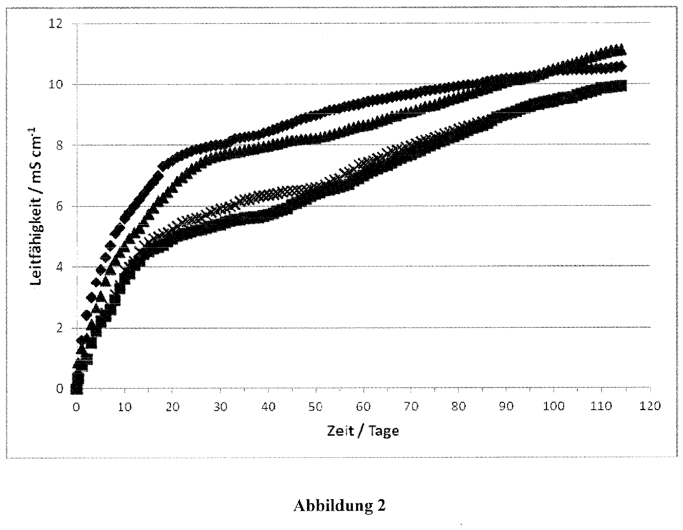

Die beschichteten Düngemittelgranulate aus den Beispielen 1, 5 und 6 und den Vergleichsbeispielen 2 und 3 wurden untersucht. Zur Bestimmung der Wirkstoffabgabe werden 10 g des beschichteten Düngemittelgranulats in 850 mL destilliertes Wasser gegeben und mit einem Magnetrührer in Bewegung gehalten. Die Wirkstofffreisetzung wird über den Leitfähigkeitsanstieg des Wassers bestimmt. Die Ergebnisse sind der Abbildung 2 zu entnehmen (▲: Beispiel 1; ◆: Beispiel 5; ■: Vergleichsbeispiel 2; ×: Beispiel 6). Aus Abbildung 2 ist ersichtlich, dass die Freisetzungsraten der beschichteten Düngemittelgranulate einen vergleichbaren Verlauf zeigen.

Tabelle 2 ist zu entnehmen, dass bei Verwendung einer Hydroxylgruppen enthaltenden Aminverbindung als Katalysator (mit oder ohne zusätzlichen Metallkatalysator) zur Härtung der Beschichtung in kurzer Zeit ein beschichtetes körniges Düngemittelgranulat von hoher Qualität erhalten werden kann (Beispiele 1, 5 und 6). Im Gegensatz dazu kann bei Verwendung des gasförmigen Katalysators Dimethylisopropylamin die Härtung der Beschichtung nicht in kurzer Zeit abgeschlossen werden, weil es erforderlich ist, den gasförmigen Katalysator zu entfernen (Freiblasen) bevor der nächste Beschichtungsschritt (Harzzugabe) erfolgt. Damit verlängert sich die Prozesszeit. Bei Verwendung einer flüssigen Hydroxylgruppen enthaltenden Aminverbindung als Katalysator in der Polyolkomponente führte die Zugabe des Katalysators zu einer Trübung der Polyolkomponente und zu einem Viskositätsanstieg in der Polyolkomponente, was auf eine Unverträglichkeit des Katalysators mit der Polyolkomponente hindeutet. Weiterhin war die Harzverteilung auf dem Düngemittelgranulat ungleichmäßig und somit die Qualität der Beschichtung nicht ausreichend, durch die zu kurze Aushärtungsdauer kam es zu Verklumpungen der beschichteten Granulatkörner, und es baute sich eine Schicht aus verklebten Granulatkörnern an der Innenseite des rotierenden Gefäßes. Dadurch wird eine wiederholte Durchführung es Verfahrens erschwert, weil das Gefäß erst aufwendig gereinigt werden muss.

| Beispiel | Beispiel 1 | Beispiel 5 | Beispiel 6 | Vergleichsbeispiel 2 | Vergleichsbeispiel 3 |
|---|---|---|---|---|---|
| Katalysator | Jeffcat Z-110 | Jeffcat Z-110 + Metallkat | Jeffcat Z-110 | Dimethylisopropylamin | Jeffcat Z-110 |
| Art der Katalyse | Amin, flüssig, als 3. Komponente | Amin flüssig, als 3. Komponente + Metallkat | Sprühverfahren | gasförmig | Amin flüssig, in der Polyolkomponente |
| Qualität der Beschichtung | gleichmäßig, ohne Klumpen | gleichmäßig, ohne Klumpen | gleichmäßig, ohne Klumpen | gleichmäßig, ohne Klumpen | ungleichmäßig, Verklumpung |
| Prozesszeit | "kurz" | "kurz" | "kurz" | "lang" | "zu kurz", Verklumpung |
| Leitfähigkeit nach 24 h (mS/cm) | 1,34 | 1,58 | 0,77 | 0,76 | |
| Leitfähigkeit nach 100 d (mS/cm) | 10,47 | 10,43 | 9,47 | 9,44 | |

## Patentansprüche

1. Beschichteter körniger Stoff, wobei die Beschichtung ein Harz umfasst, das das Reaktionsprodukt aus einer Polyolkomponente und einer Isocyanatkomponente umfasst, und das durch Zugabe eines Katalysators gehärtet wurde, wobei der Katalysator mindestens eine Hydroxylgruppen enthaltende Aminverbindung der allgemeinen Formel (I) umfasst: 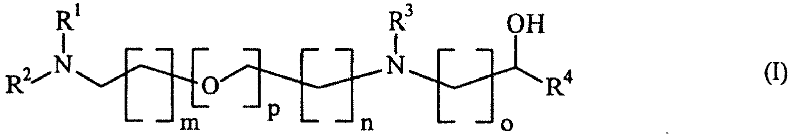 wobei
R¹ ein C₁- bis C₄-Alkylrest ist;
R² ein C₁- bis C₄-Alkylrest ist;
R³ ein C₁- bis C₄-Alkylrest, ein Rest -(CH₂)_{q}-CH(OH)R⁵ oder ein Rest -CH₂-(CH₂)ᵣ-NR⁶R⁷ ist;
R⁴ ein Wasserstoffatom oder ein C₁- bis C₄-Alkylrest ist;
R⁵ ein Wasserstoffatom oder ein C₁- bis C₄-Alkylrest ist;
R⁶ ein C₁- bis C₄-Alkylrest ist;
R⁷ ein C₁- bis C₄-Alkylrest ist;
m eine ganze Zahl von 0 bis 10 ist;
n eine ganze Zahl von 0 bis 10 ist;
o eine ganze Zahl von 1 bis 10 ist;
p eine ganze Zahl von 0 bis 10 ist;
q eine ganze Zahl von 1 bis 10 ist; und
r eine ganze Zahl von 0 bis 10 ist.

2. Beschichteter körniger Stoff nach Anspruch 1, wobei die Hydroxylgruppen enthaltende Aminverbindung aus Verbindungen der allgemeinen Formeln (II), (III), (IV) und (V): 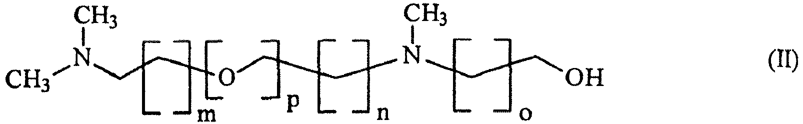 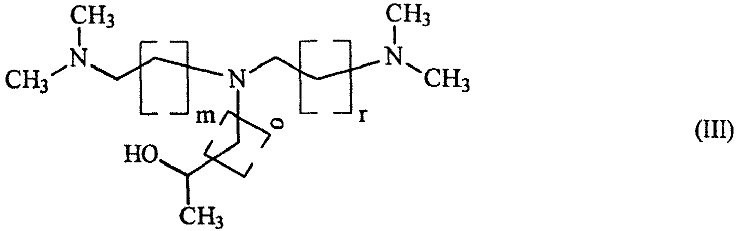 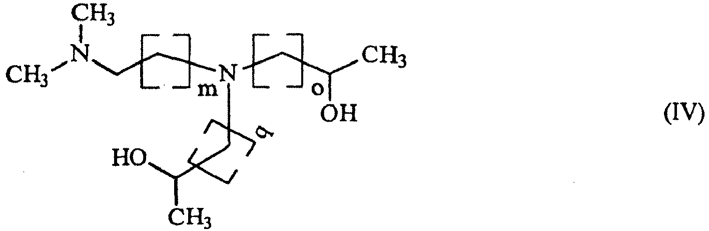 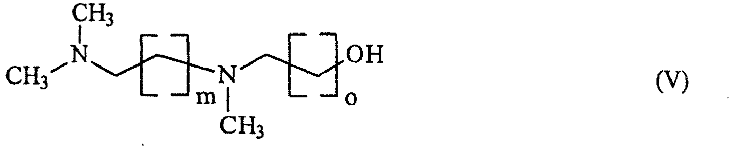 wobei m, n, o, p, q und r wie im Anspruch 1 definiert sind, ausgewählt ist.

3. Beschichteter körniger Stoff nach Anspruch 2, wobei die Hydroxylgruppen enthaltende Aminverbindung aus Verbindungen der Formeln (IIa), (IIIa), (IVa) und (Va): 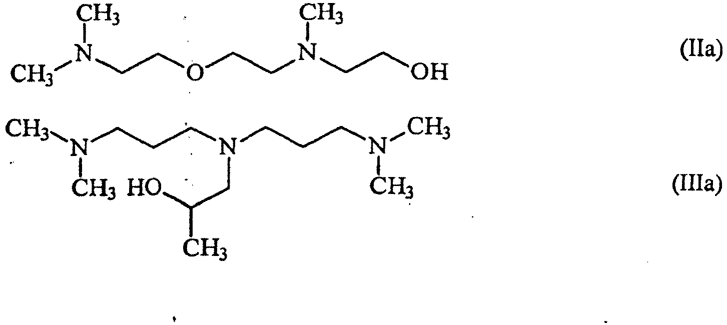 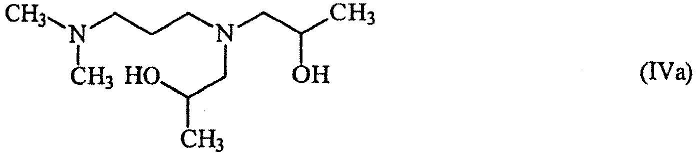 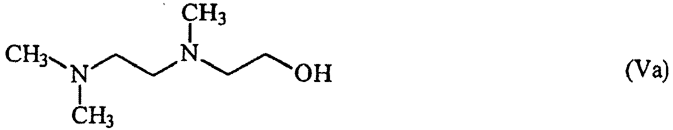 ausgewählt ist.

4. Beschichteter körniger Stoff nach einem der vorhergehenden Ansprüche, wobei die Polyolkomponente in einer Menge von ca. 1 Gew.% bis ca. 20 Gew.%, bezogen auf das Gewicht des körnigen Stoffes ohne Beschichtung, eingesetzt wird.

5. Beschichteter körniger Stoff nach einem der vorhergehenden Ansprüche, wobei das stöchiometrische Verhältnis von Polyol- zu Isocyanatkomponente von ca. 1,3:1 bis ca. 1:1,3 beträgt.

6. Beschichteter körniger Stoff nach einem der vorhergehenden Ansprüche, wobei der Katalysator in einer Menge von ca. 0,1 Gew.% bis ca. 20 Gew.%, bezogen auf die eingesetzte Gesamtmenge aus der Menge der Polyolkomponente und der Menge der Isocyanatkomponente, eingesetzt wird.

7. Beschichteter körniger Stoff nach einem der vorhergehenden Ansprüche, wobei der Katalysator die Hydroxylgruppen enthaltende Aminverbindung der allgemeinen Formel (I) in einer Menge von mindestens ca. 30 Gew.%, bezogen auf die Gesamtmenge an Katalysator, umfasst.

8. Beschichteter körniger Stoff nach einem der vorhergehenden Ansprüche, wobei der körnige Stoff aus Düngemitteln, Pflanzenschutzmitteln, Insektiziden, Pestiziden, Fungiziden, Trocknungsmitteln und geeigneten Gemischen davon ausgewählt ist.

9. Beschichteter körniger Stoff nach einem der vorhergehenden Ansprüche, wobei die Menge der Beschichtung ca. 2 bis ca. 15 Gew.-%, bezogen auf die Menge an körnigem Stoff beträgt.

10. Beschichteter körniger Stoff nach einem der vorhergehenden Ansprüche, wobei die Korngröße des körnigen Stoffes ca. 1 bis ca. 5 mm beträgt.

11. Beschichteter körniger Stoff nach einem der vorhergehenden Ansprüche, wobei die Polyolkomponente ein Basisphenol umfasst, das mindestens eine Verbindung ausgewählt aus Cardol oder Cardanol, deren Derivaten oder deren Oligomeren und/oder einem oder mehreren Kondensationsprodukten aus einem Phenol und einem Aldehyd umfasst.

12. Beschichteter körniger Stoff nach Anspruch 11, wobei die Polyolkomponente mindestens eine Verbindung ausgewählt aus Cardol und/oder Cardanol oder deren Derivaten oder Oligomeren oder Mischungen daraus zu einem Anteil von ca. 5 bis ca. 100 Gew.%, vorzugsweise von ca. 7 bis ca. 70 Gew.%, besonders bevorzugt ca. 10 bis ca. 40 Gew.%, umfasst.

13. Beschichteter körniger Stoff nach Anspruch 11, wobei die Polyolkomponente das eine oder die mehreren Kondensationsprodukte in einer Menge von ca. 10 bis ca. 90 Gew.%, vorzugsweise von ca. 20 bis ca. 70 Gew.%, bezogen auf die Polyolkomponente, umfasst.

14. Verfahren zum Beschichten eines körnigen Stoffes, umfassend die Schritte
(a) Bereitstellen eines körnigen Stoffes;
(b) Bereitstellen einer Polyolkomponente und einer Isocyanatkomponente;
(c) wahlweise Mischen der Polyolkomponente mit der Isocyanatkomponente;
(d) Zugabe der Mischung aus Schritt (c) oder der Polyolkomponente und der Isocyanatkomponente als Einzelstoffe zu dem bereitgestellten körnigen Stoff und Erzeugen einer Beschichtung auf dem körnigen Stoff;
(e) Härten der Beschichtung; und
(f) wahlweise Wiederholen der Schritte (d) und (e),
wobei der Katalysator zum Härten der Verbindung vor den Schritten (c) und (d) der Polyolkomponente zugegeben wird, oder, vorzugsweise, im Schritt (e) zugefügt wird und der Katalysator mindestens eine Hydroxylgruppen enthaltende Aminverbindung der allgemeinen Formel (I) umfasst: 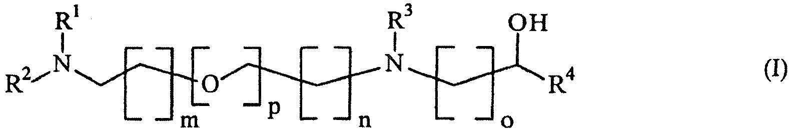 wobei
R¹ ein C₁- bis C₄-Alkylrest ist;
R² ein C₁- bis C₄-Alkylrest ist;
R³ ein C₁- bis C₄-Alkylrest, ein Rest -(CH₂)_{q}-CH(OH)R⁵ oder ein Rest -CH₂-(CH₂)ᵣ-CH₂-NR⁶R⁷ ist;
R⁴ ein Wasserstoffatom oder ein C₁- bis C₄-Alkylrest ist;
R⁵ ein Wasserstoffatom oder ein C₁- bis C₄-Alkylrest ist;
R⁶ ein C₁- bis C₄-Alkylrest ist;
R⁷ ein C₁- bis C₄-Alkylrest ist;
m eine ganze Zahl von 0 bis 10 ist;
n eine ganze Zahl von 0 bis 10 ist;
o eine ganze Zahl von 1 bis 10 ist;
p eine ganze Zahl von 0 bis 10 ist;
q eine ganze Zahl von 1 bis 10 ist; und
r eine ganze Zahl von 0 bis 10 ist.

15. Verfahren nach Anspruch 14, wobei die Hydroxylgruppen enthaltende Aminverbindung aus Verbindungen der allgemeinen Formeln (II), (III), (IV) und (V): 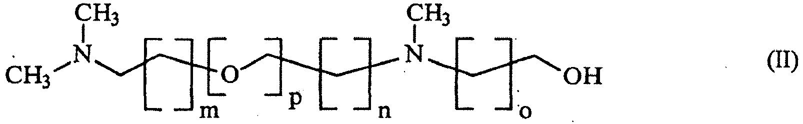 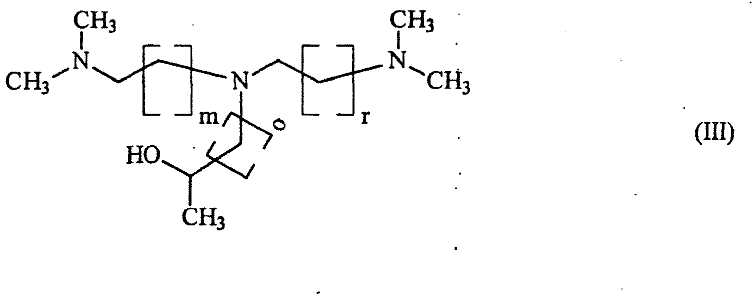 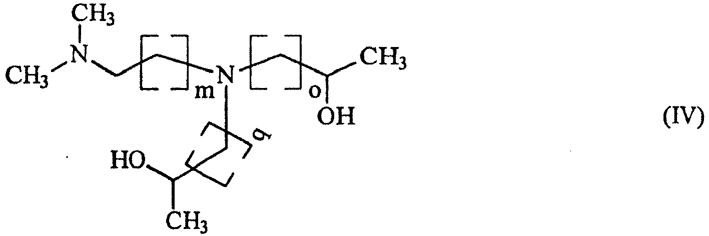 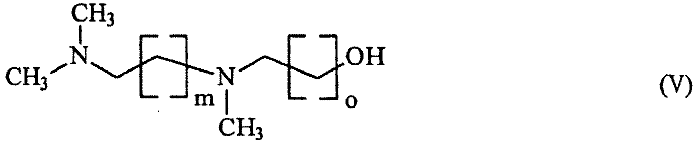 wobei m, n, o, p, q und r wie im Anspruch 14 definiert sind, ausgewählt ist.

16. Verfahren nach Anspruch 14 oder 15, wobei im Schritt (e) der Katalysator in flüssiger Form eingesetzt wird.

17. Verfahren nach Anspruch 16, wobei im Schritt (e) der Katalysator in Form eines Sprühnebels eingesetzt wird.

18. Beschichteter körniger Stoff gemäß einem der Ansprüche 1 bis 13 erhältlich nach dem Verfahren gemäß einem der Ansprüche 14 bis 17.

## Claims

1. Coated granular substance, wherein the coating comprises a resin comprising the reaction product of a polyol component and an isocyanate component and which was cured by the addition of a catalyst, said catalyst comprising at least one hydroxy group-containing amine compound of the general formula (I): 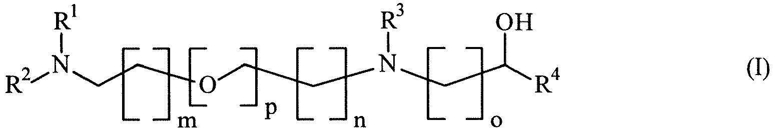 wherein
R¹ is a C₁ to C₄ alkyl group;
R² is a C₁ to C₄ alkyl group;
R³ is a C₁ to C₄ alkyl group, a group -(CH₂)_{q}-CH(OH)R⁵ or a group -CH₂-(CH₂)ᵣ-NR⁶R⁷;
R⁴ is a hydrogen atom or a C₁ to C₄ alkyl group;
R⁵ is a hydrogen atom or a C₁ to C₄ alkyl group;
R⁶ is a C₁ to C₄ alkyl group;
R⁷ is a C₁ to C₄ alkyl group;
m is an integer of from 0 to 10;
n is an integer of from 0 to 10;
o is an integer of from 1 to 10;
p is an integer of from 0 to 10;
q is an integer of from 1 to 10; and
r is an integer of from 0 to 10.

2. Coated granular substance according to claim 1, wherein the hydroxy group-containing amine compound is selected from compounds of the general formulae (II), (III), (IV), and (V): 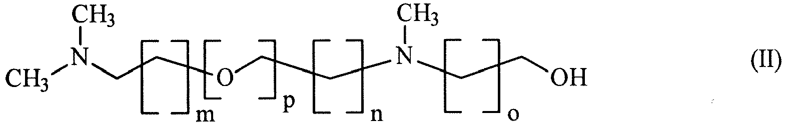 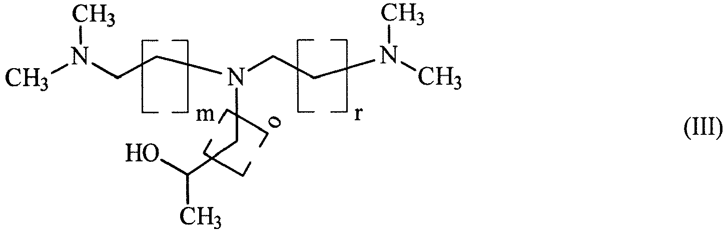 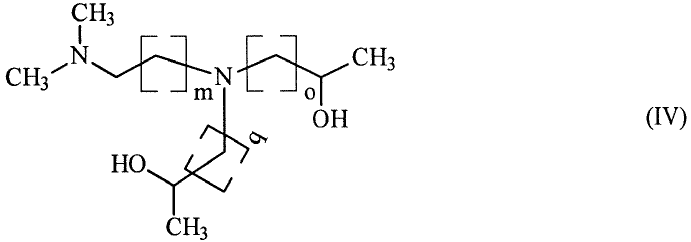 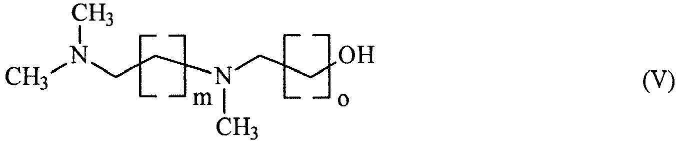 wherein m, n, o, p, q and r are as defined in claim 1.

3. Coated granular substance according to claim 2, wherein the hydroxy group-containing amine compound is selected from compounds of the formulae (IIa), (IIIa), (IVa), and (Va):

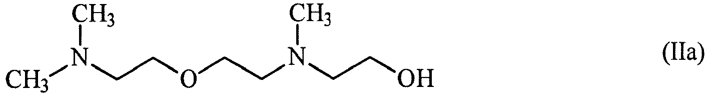

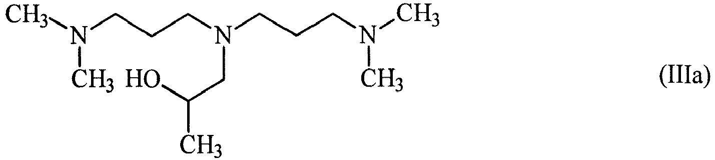

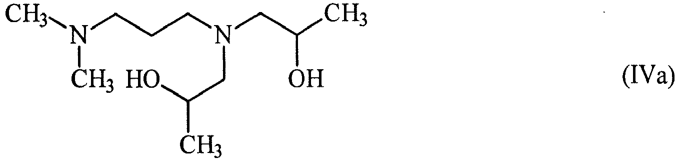

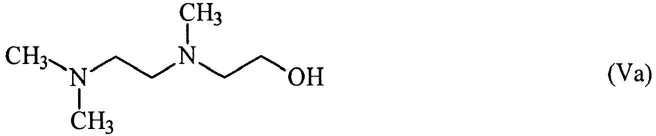

4. Coated granular substance according to any one of the preceding claims, wherein the polyol component is used in an amount of about 1% by weight to about 20% by weight, based on the weight of the granular substance without coating.

5. Coated granular substance according to any one of the preceding claims, wherein the stoichiometrical ratio of polyol to isocyanate component is from about 1.3:1 to about 1:1.3.

6. Coated granular substance according to any one of the preceding claims, wherein the catalyst is used in an amount of about 0.1% by weight to about 20% by weight, based on the total amount of the amount of the polyol component and the amount of the isocyanate component used.

7. Coated granular substance according to any one of the preceding claims, wherein the catalyst comprises the hydroxy group-containing amine compound of the general formula (I) in an amount of at least about 30% by weight, based on the total amount of catalyst.

8. Coated granular substance according to any one of the preceding claims, wherein the granular substance is selected from fertilizers, plant protection agents, insecticides, pesticides, fungicides, drying agents and suitable mixtures thereof.

9. Coated granular substance according to any one of the preceding claims, wherein the amount of the coating is from about 2 to about 15% by weight, based on the amount of granular substance.

10. Coated granular substance according to any one of the preceding claims, wherein the grain size of the granular substance is about 1 to about 5 mm.

11. Coated granular substance according to any one of the preceding claims, wherein the polyol component comprises a base polyol comprising at least one compound selected from cardol or cardanol, their derivatives or their oligomers, and/or one or more condensation products of a phenol and an aldehyde.

12. Coated granular substance according to claim 11, wherein the polyol component comprises at least one compound selected from cardol and/or cardanol or their derivatives or oligomers or mixtures thereof, at a proportion of about 5 to about 100% by weight, preferably of about 7 to about 70% by weight, particularly perferred about 10 to about 40% by weight.

13. Coated granular substance according to claim 11, wherein the polyol component comprises the one or more condensation products in an amount of about 10 to about 90% by weight, preferably of about 20 to about 70% by weight, based on the polyol component.

14. Method for coating a granular substance, comprising the steps of
(a) providing a granular substance;
(b) providing a polyol component and an isocyanate component;
(c) optionally mixing the polyol component with the isocyanate component;
(d) adding the mixture of step (c) or the polyol component and the isocyanate component as individual substances to the provided granular substance and producing a coating on the granular substance;
(e) curing the coating; and
(f) optionally repeating steps (d) and (e),
wherein the catalyst for curing the compound is added to the polyol component prior to steps (c) and (d) or is, preferably, added in step (e) and the catalyst comprises at least one hydroxy group-containing amine compound of the general formula (I): 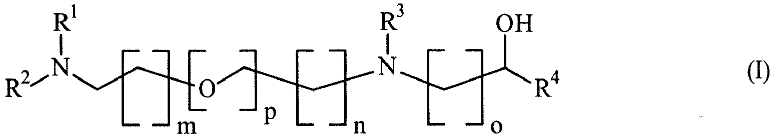 wherein
R¹ is a C₁ to C₄ alkyl group;
R² is a C₁ to C₄ alkyl group;
R³ is a C₁ to C₄ alkyl group, a group -(CH₂)_{q}-CH(OH)R⁵ or a group -CH₂-(CH₂)ᵣ-CH₂-NR⁶R⁷;
R⁴ is a hydrogen atom or a C₁ to C₄ alkyl group;
R⁵ is a hydrogen atom or a C₁ to C₄ alkyl group;
R⁶ is a C₁ to C₄ alkyl group;
R⁷ is a C₁ to C₄ alkyl group;
m is an integer of from 0 to 10;
n is an integer of from 0 to 10;
o is an integer of from 1 to 10;
p is an integer of from 0 to 10;
q is an integer of from 1 to 10; and
r is an integer of from 0 to 10.

15. Method according to claim 14, wherein the hydroxy group-containing amine compound is selected from compounds of the general formulae (II), (III), (IV), and (V): 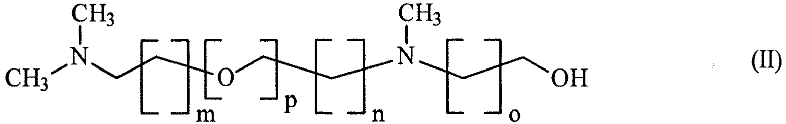 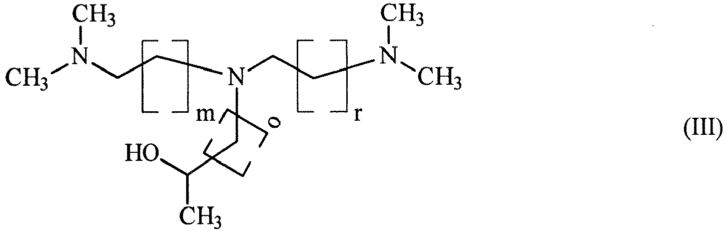 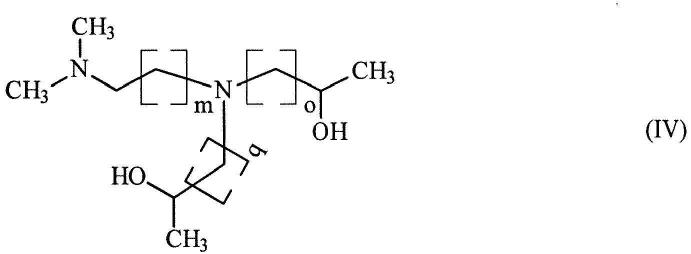 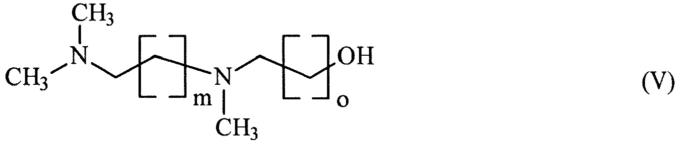 wherein m, n, o, p, q and r are as defined in claim 14.

16. Method according to claim 14 or 15, wherein in step (e) the catalyst is used in liquid form.

17. Method according to claim 16, wherein in step (e) the catalyst is used in the form of a spray.

18. Coated granular substance according to any one of claims 1 to 13 obtainable by the method according to any of claims 14 to 17.

## Revendications

1. Substance granuleuse enrobée, dans laquelle l'enrobage comprend une résine qui comprend le produit réactionnel d'un composant polyol et d'un composant isocyanate, et qui a été durcie grâce à l'addition d'un catalyseur, le catalyseur comprenant au moins un composé amine contenant un groupe hydroxyle de formule générale (I) : 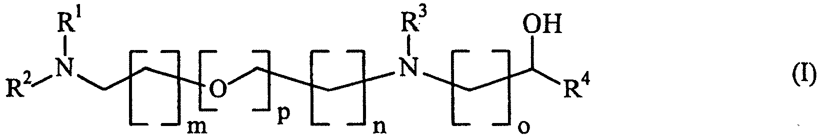 dans laquelle
R¹ est un résidu alkyle en C₁ à C₄ ;
R² est un résidu alkyle en C₁ à C₄ ;
R³ est un résidu alkyle en C₁ à C₄, un résidu -(CH₂)_{q}-CH(OH)R⁵ ou un résidu -CH₂-(CH₂)ᵣ-NR⁶R⁷ ;
R⁴ est un atome d'hydrogène ou un résidu alkyle en C₁ à C₄ ;
R⁵ est un atome d'hydrogène ou un résidu alkyle en C₁ à C₄ ;
R⁶ est un résidu alkyle en C₁ à C₄ ;
R⁷ est un résidu alkyle en C₁ à C₄ ;
m est un nombre entier de 0 à 10 ;
n est un nombre entier de 0 à 10 ;
o est un nombre entier de 1 à 10 ;
p est un nombre entier de 0 à 10 ;
q est un nombre entier de 1 à 10 ; et
r est un nombre entier de 0 à 10.

2. Substance granuleuse enrobée selon la revendication 1, dans laquelle le composé amine contenant un groupe hydroxyle est choisi parmi les composés de formules générales (II), (III), (IV) et (V) : 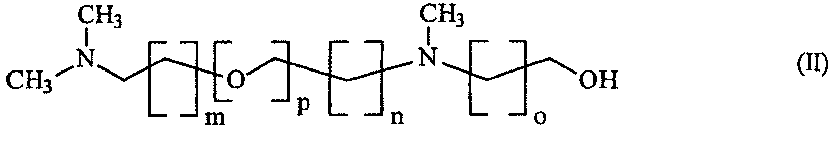 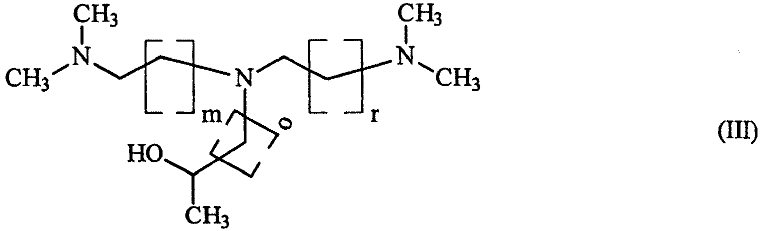 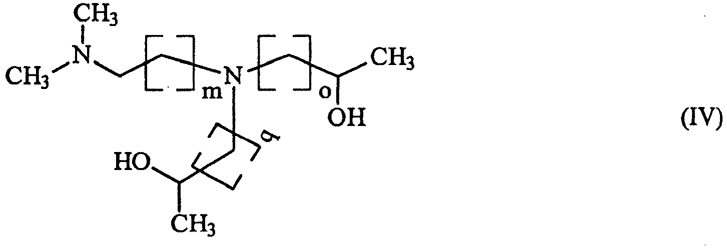 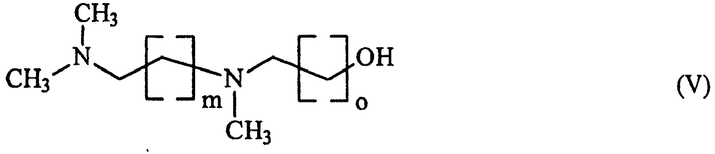 dans lesquelles m, n, o, p, q et r sont tels que définis dans la revendication 1.

3. Substance granuleuse enrobée selon la revendication 2, dans laquelle le composé amine contenant un groupe hydroxyle est choisi parmi les composés de formules générales (IIa), (IIIa), (IVa) et (Va) :

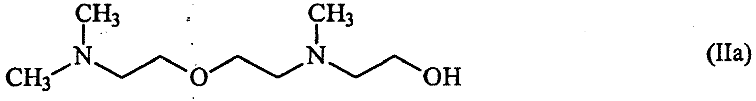

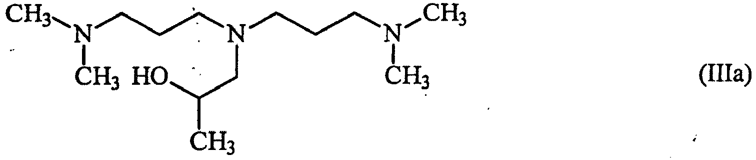

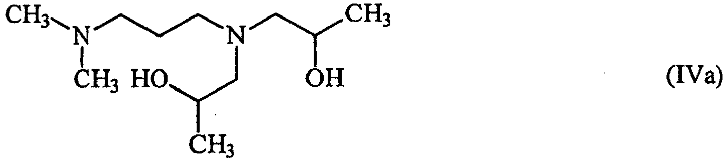

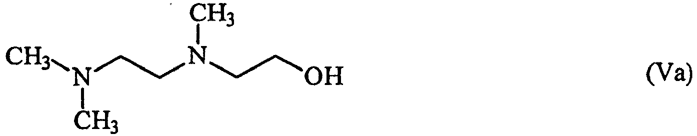

4. Substance granuleuse enrobée selon l'une des revendications précédentes, dans laquelle le composant polyol est mis en œuvre en une quantité d'environ 1 % en poids à environ 20 % en poids, par rapport au poids de la substance granuleuse sans enrobage.

5. Substance granuleuse enrobée selon l'une des revendications précédentes, dans laquelle le rapport stœchiométrique du composant polyol sur le composant isocyanate est d'environ 1,3 : 1 à environ 1 : 1,3.

6. Substance granuleuse enrobée selon l'une des revendications précédentes, dans laquelle le catalyseur est mis en oeuvre en une quantité d'environ 0,1 % en poids à environ 20 % en poids, par rapport à la quantité totale mise en œuvre de la quantité de composant polyol et de la quantité de composant isocyanate.

7. Substance granuleuse enrobée selon l'une des revendications précédentes, dans laquelle le catalyseur comprend le composé amine contenant un groupe hydroxyle de formule générale (I) en une quantité d'au moins environ 30 % en poids sur la quantité totale de catalyseur.

8. Substance granuleuse enrobée selon l'une des revendications précédentes, dans laquelle la substance granuleuse est choisie parmi les engrais, les produits phytosanitaires, les insecticides, les pesticides, les fongicides, les agents dessiccatifs et les mélanges appropriés de ceux-ci.

9. Substance granuleuse enrobée selon l'une des revendications précédentes, dans laquelle la quantité d'enrobage est d'environ 2 à environ 15 % en poids par rapport à la quantité de substance granuleuse.

10. Substance granuleuse enrobée selon l'une des revendications précédentes, dans laquelle la taille de grain de la substance granuleuse est d'environ 1 à environ 5 mm.

11. Substance granuleuse enrobée selon l'une des revendications précédentes, dans laquelle le composant polyol comprend un polyol de base qui comprend au moins un composé choisi parmi le cardol ou le cardanol, leurs dérivés ou leurs oligomères et/ou un ou plusieurs produits de condensation d'un phénol et d'un aldéhyde.

12. Substance granuleuse enrobée selon la revendication 11, dans laquelle le composant polyol comprend au moins un composé choisi parmi le cardol et/ou le cardanol ou leurs dérivés ou oligomères ou les mélanges de ceux-ci en une proportion d'environ 5 à environ 100 % en poids, de manière préférée d'environ 7 à environ 70 % en poids, de manière particulièrement préférée d'environ 10 à environ 40 % en poids.

13. Substance granuleuse enrobée selon la revendication 11, dans laquelle le composant polyol comprend les un ou plusieurs produits de condensation en une quantité d'environ 10 à environ 90 % en poids, de préférence d'environ 20 à environ 70 % en poids, par rapport au composant polyol.

14. Procédé pour l'enrobage d'une substance granuleuse, comprenant les étapes consistant à
(a) fournir une substance granuleuse ;
(b) fournir un composant polyol et un composant isocyanate ;
(c) mélanger sélectivement le composant polyol et le composant isocyanate ;
(d) ajouter le mélange de l'étape (c) ou le composant polyol et le composant isocyanate en tant que substances individuelles à la substance granuleuse fournie et générer un enrobage sur la substance granuleuse ;
(e) durcir l'enrobage ; et
(f) répéter sélectivement les étapes (d) et (e),
le catalyseur pour le durcissement du composé étant ajouté au composant polyol aux étapes (c) et (d), ou, de préférence, étant ajouté à l'étape (e), et le catalyseur comprenant au moins un composé amine contenant un groupe hydroxyle de formule générale (I) : 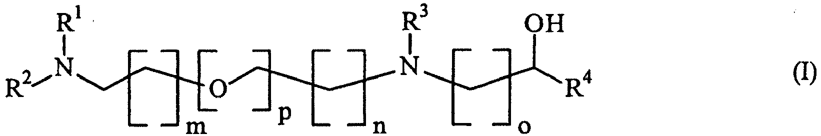 dans laquelle
R¹ est un résidu alkyle en C₁ à C₄ ;
R² est un résidu alkyle en C₁ à C₄ ;
R³ est un résidu alkyle en C₁ à C₄, un résidu -(CH₂)_{q}-CH(OH)R⁵ ou un résidu -CH₂-(CH₂)ᵣ-CH₂NR⁶R⁷ ;
R⁴ est un atome d'hydrogène ou un résidu alkyle en C₁ à C₄ ;
R⁵ est un atome d'hydrogène ou un résidu alkyle en C₁ à C₄ ;
R⁶ est un résidu alkyle en C₁ à C₄ ;
R⁷ est un résidu alkyle en C₁ à C₄ ;
m est un nombre entier de 0 à 10 ;
n est un nombre entier de 0 à 10 ;
o est un nombre entier de 1 à 10 ;
p est un nombre entier de 0 à 10 ;
q est un nombre entier de 1 à 10 ; et
r est un nombre entier de 0 à 10.

15. Procédé selon la revendication 14, dans lequel le composé amine contenant un groupe hydroxyle est choisi parmi les composés de formules générales (II), (III), (IV) et (V) : 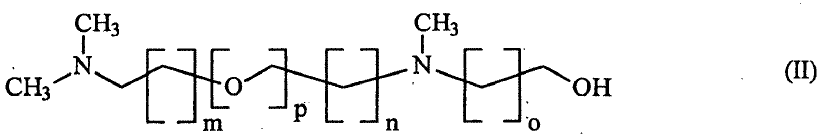 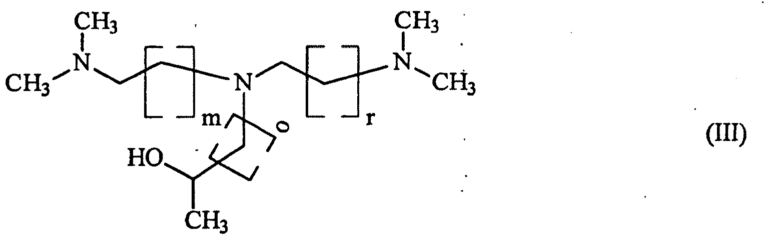 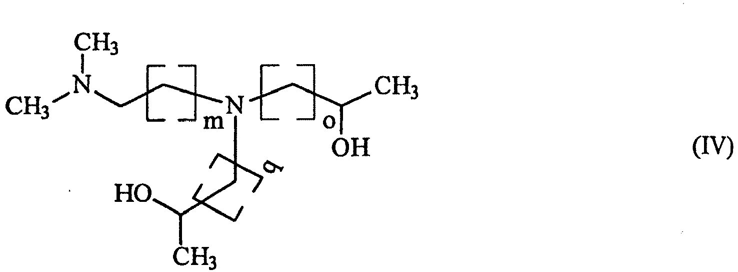 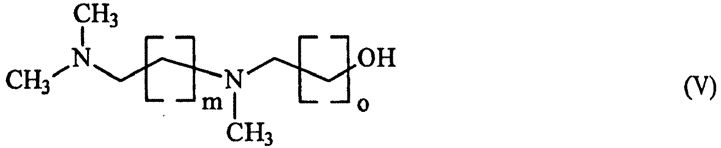 dans lesquelles m, n, o, p, q et r sont tels que définis dans la revendication 14.

16. Procédé selon la revendication 14 ou 15, dans lequel, à l'étape (e), le catalyseur est mis en œuvre sous forme liquide.

17. Procédé selon la revendication 16, dans lequel, à l'étape (e), le catalyseur est mis en oeuvre sous forme d'un brouillard de pulvérisation.

18. Substance granuleuse enrobée selon l'une des revendications 1 à 13 pouvant être obtenue d'après le procédé selon l'une des revendications 14 à 17.
